# EUROPEAN PATENT APPLICATION

(11) **EP 4 583 495 A1**
(43) Date of publication of application: **09.07.2025**
(21) Application number: 22959941.0
(22) Date of filing: 28.09.2022
(51) Int. Cl.: H04L 69/04, G06F 8/658

(54) **DATA TRANSMISSION METHOD AND APPARATUSES**

(71) Applicant: Huawei Technologies Co., Ltd., Shenzhen, Guangdong 518129 (CN)
(72) Inventor: TANG, Zihan, Shenzhen, Guangdong 518129 (CN); MA, Mengyao, Shenzhen, Guangdong 518129 (CN); XIE, Junwen, Shenzhen, Guangdong 518129 (CN)
(74) Representative: Körber, Martin Hans
(86) International application number: PCT/CN2022/122210
(87) International publication number: WO 2024/065296

(57) **Abstract**

A data transmission method and an apparatus are provided, and relate to the field of communication technologies, so that when a sensing device reports sensing data, the sensing data can be compressed, to reduce consumption of an air interface resource. The method includes: A first apparatus receives first information, processes first data based on the first information to obtain second data, and sends the second data to a second apparatus, where the first information indicates reference data that is of a first sensing area and that is stored in the second apparatus, the first data includes data sensed by the first apparatus in the first sensing area, and the second data includes data that is in the first data and that is changed compared with the first information.

## Description

### TECHNICAL FIELD

This application relates to the field of communication technologies, and in particular, to a data transmission method and an apparatus.

### BACKGROUND

In a communication system, sensing data, as a type of important air interface native data, may be widely applied to a sensing-based environment reconstruction or imaging scenario. A multi-device joint sensing manner may be used. Each sensing device transmits sensed local sensing data to a data fusion center, and the data fusion center summarizes and fuses the received sensing data to obtain a complete environment result. This can reduce sensing and transmission overheads of a single sensing device.

In the multi-device joint sensing manner, sensing areas of different sensing devices may overlap in space to some extent. Therefore, there is a large amount of redundancy between sensing data sensed by the sensing devices for a same sensing area at different moments, and there is large data compression space.

When a sensing device reports sensing data, how to compress the sensing data to reduce consumption of an air interface resource becomes an urgent technical problem to be resolved.

### SUMMARY

Embodiments of this application provide a data transmission method and an apparatus, so that when a sensing device reports sensing data, the sensing data can be compressed, to reduce consumption of an air interface resource.

According to a first aspect, an embodiment of this application provides a data transmission method. The method may include: A first apparatus receives first information, processes first data based on the first information to obtain second data, and sends the second data to a second apparatus. The first information indicates reference data that is of the first sensing area and that is stored in the second apparatus, the first data includes data sensed by the first apparatus in the first sensing area, and the second data includes data that is in the first data and that is changed compared with the first information.

Based on the first aspect, the first apparatus may assist, based on the reference data that is of the first sensing area and that is stored in the second apparatus, the first apparatus in reporting a part (namely, the second data) that is of sensed data (namely, the first data) and that is changed relative to existing data (namely, the reference data) of the second apparatus. Alternatively, the description is as follows: The first apparatus extracts, from the sensed data (namely, the first data), a small amount of key information (namely, the second data) that needs to be reported. Alternatively, the description is as follows: Redundancy included in the first data is mined by using global data possessed by the second apparatus and interaction between the second apparatus and the first apparatus, to assist the first apparatus in performing data compression. This can greatly reduce an amount of data reported by the first apparatus, reduce transmission overheads of the first apparatus, and reduce consumption of an air interface resource.

In a possible design, the second data includes one or more of the following: incremental data and deleted data. The incremental data includes data that is in the first data and that is added compared with the first information, and the deleted data includes data that is in the first data and that is deleted compared with the first information.

Based on this possible design, for a changed environment, compared with the reference data stored in the second apparatus, in the first data sensed by the first apparatus, an object may be added or an object may be reduced. When reporting the second data to the second apparatus, the first apparatus may report the second data to the second apparatus in a manner of reporting the incremental data and the deleted data.

In a possible design, the second data further includes one or more of the following: an incremental data identifier or a deleted data identifier. The incremental data identifier indicates the incremental data, and the deleted data identifier indicates the deleted data.

Based on this possible design, the incremental data identifier and the deleted data identifier are added to the second data, so that the incremental data and the deleted data can be distinguished, and when the second apparatus restores the first data, the incremental data is added to the reference data, and the deleted data is removed from the reference data, to obtain the first data.

In a possible design, the first information includes reference quantization data. The reference quantization data is data obtained by quantizing the reference data by the second apparatus.

Based on this possible design, the second apparatus may quantize the reference data, to obtain the reference quantization data. Compared with delivering the reference data with a large data amount, delivering the reference quantization data can reduce a data amount of data (namely, the reference quantization data) sent by the second apparatus to the first apparatus, and reduce consumption of an air interface resource.

In a possible design, the first information further includes one or more of the following: first sensing area information, quantization precision of the reference quantization data, or data reporting precision. The data reporting precision includes one or more of the following: incremental data reporting precision or deleted data reporting precision.

Based on this possible design, the second apparatus indicates the first sensing area to the first apparatus, to ensure that the first apparatus and the second apparatus process data of a same sensing area (namely, the first sensing area).

In addition, the second apparatus indicates the quantization precision of the reference quantization data to the first apparatus, so that the first apparatus quantizes the first data to obtain the first quantization data. It is convenient for the first apparatus to compare the first quantization data and the reference quantization data that are at a same quantization level, and an amount of data processed according to an extraction algorithm can be reduced, a processing process can be simplified, and processing efficiency can be improved. In addition, an angle of view/location deviation between the first quantization data and the reference quantization data can be reduced. In this way, impact on accuracy of the second data caused by an angle of view/location deviation between the first data and the first information is reduced, and accuracy of the second data is improved.

In addition, the second apparatus indicates the data reporting precision to the first apparatus. Because the incremental data is data that is in data sensed by the first apparatus and that is added compared with the reference data, when the first apparatus reports the incremental data to the second apparatus, the first apparatus may report high-precision incremental data, so that the second apparatus reconstructs, based on the high-precision incremental data, an environment result having more detailed information. Because the deleted data is data that is deleted from the data sensed by the first apparatus compared with the reference data, the second apparatus already stores high-precision data corresponding to the deleted data. When reporting the deleted data to the second apparatus, the first apparatus may report low-precision deleted data, to reduce an amount of reported data and reduce consumption of an air interface resource.

In a possible design, the first apparatus quantizes the first data based on the quantization precision of the reference quantization data, to obtain first quantization data; determines second quantization data based on the reference quantization data and the first quantization data; and determines the second data based on the second quantization data. The second quantization data includes data that is in the first quantization data and that is changed compared with the reference quantization data.

Based on this possible design, because there may be an angle of view/location deviation between the first data and the first information (for example, the reference quantization data), the first apparatus quantizes the first data based on quantization precision of the reference quantization data. It is convenient to compare the first quantization data and the reference quantization data that are at a same quantization level, and an amount of data processed according to an extraction algorithm can be reduced, a processing process can be simplified, and processing efficiency can be improved. In addition, an angle of view/location deviation between the first quantization data and the reference quantization data can be reduced. In this way, impact on accuracy of the second data caused by an angle of view/location deviation between the first data and the first information is reduced, and accuracy of the second data is improved.

In a possible design, before the first apparatus receives the first information, the first apparatus sends second information to the second apparatus, where the second information indicates the first sensing area.

Based on this possible design, the first apparatus sends the second information to the second apparatus, so that the second apparatus may determine, based on the second information, that a sensing area associated with the first apparatus is the first sensing area. In this way, when the second apparatus sends the first information to the first apparatus, the second apparatus may retrieve, based on the first sensing area, data of a similar and/or a same space range from existing global data of the second apparatus, to obtain reference data, and then send the first information to the first apparatus.

In a possible design, the second information includes one or more of the following: location information of the first apparatus, angle of view information of the first apparatus, sensing capability information of the first apparatus, and first sensing area information. The sensing capability information of the first apparatus indicates a sensing distance and/or sensing precision supported by the first apparatus, and the first sensing area information indicates the first sensing area.

Based on this possible design, a plurality of feasible solutions are provided for the first apparatus to indicate the first sensing area to the second apparatus by using the second information.

In a possible design, the first apparatus compresses the second data based on the data reporting precision, to obtain second data obtained through compression, and sends the second data obtained through compression to the second apparatus.

Based on this possible design, the first apparatus sends the second data obtained through compression to the second apparatus, so that an amount of data reported by the first apparatus can be reduced, and consumption of an air interface resource can be reduced.

In a possible design, when a ratio of a data amount of the second data to a data amount of the first data is less than or equal to a first threshold, the first apparatus sends the second data obtained through compression to the second apparatus.

In a possible design, when the ratio of the data amount of the second data to the data amount of the first data is greater than the first threshold, the first apparatus sends first data obtained through compression to the second apparatus.

Based on the foregoing two possible designs, when the angle of view/location difference between the first data and the reference data is large, or when the first data changes a lot of data compared with the reference data, effect of extracting the second data according to the foregoing extraction algorithm may be poor, and effect of reducing an amount of reported data cannot be achieved. In this case, the first apparatus may determine not to report the second data (or not to report the second data obtained through compression), but to report the first data (or report first data obtained through compression).

In a possible design, the first apparatus sends first indication information to the second apparatus. The first indication information indicates that data sent by the first apparatus is the second data obtained through compression, or the first indication information indicates that data sent by the first apparatus is the first data obtained through compression.

Based on this possible design, the first apparatus sends the first indication information to the second apparatus, so that the second apparatus can determine, based on the received first indication information, whether the extraction algorithm is successful. When the second apparatus determines that the extraction algorithm is successful, the second apparatus may decompress the received data to obtain the second data. When the second apparatus determines that the extraction algorithm fails, the second apparatus may decompress the received data to obtain the first data.

In a possible design, after the first apparatus processes the first data based on the first information to obtain the second data, the first apparatus sends a resource request to a third apparatus, where the resource request includes a data amount of the second data obtained through compression; the first apparatus receives a resource response from the third apparatus, where the resource response indicates a transmission resource configured by the third apparatus for the first apparatus; and the first apparatus sends the second data obtained through compression to the second apparatus through the transmission resource.

Based on this possible design, the first apparatus indicates the data amount of the second data obtained through compression to the third apparatus, so that the third apparatus can configure a corresponding transmission resource for the first apparatus based on the data amount, thereby avoiding a waste of a resource.

In a possible design, the first apparatus receives a first transmission resource configuration from a third apparatus, where the first transmission resource configuration indicates a first transmission resource. When the first transmission resource is less than a transmission resource required by the second data obtained through compression, the first apparatus segments, based on the first transmission resource, the second data obtained through compression, to obtain first segment data and second segment data, where a transmission resource required by the first segment data is less than or equal to the first transmission resource. The first apparatus sends the first segment data and remaining data amount information to the second apparatus through the first transmission resource, where the remaining data amount information indicates a data amount of the second segment data.

In a possible design, the first apparatus receives a second transmission resource configuration from the third apparatus, where the second transmission resource configuration indicates a second transmission resource. The first apparatus sends the second segment data to the second apparatus through the second transmission resource.

Based on the foregoing two possible designs, the third apparatus may send a transmission resource configuration to the first apparatus. When the transmission resource configured by the third apparatus is insufficient for the first apparatus to report the second data obtained through complete compression once, the first apparatus may perform resource scheduling and data reporting for a plurality of times.

In a possible design, that the first apparatus sends the second data to the second apparatus includes: The first apparatus compresses the second data to obtain X layers of data, where a transmission priority of an i^{th} layer of data is higher than a transmission priority of an (i+1)^{th} layer of data, and 1≤i<X; and the first apparatus sends first Y layers of data of the X layers of data and precision information to the second apparatus, where Y is less than or equal to X, and the precision information indicates data precision of the first Y layers of data.

Based on this possible design, the first apparatus may perform layered compression on the second data, and preferentially report data (for example, the first Y layers of data) of high importance to the second apparatus.

According to a second aspect, an embodiment of this application provides a data transmission method. The method may include: A second apparatus sends first information to a first apparatus, and receives second data from the first apparatus. The first information indicates reference data that is of a first sensing area and that is stored in the second apparatus, the second data includes data that is in the first data and that is changed compared with the first information, and the first data includes data sensed by the first apparatus in the first sensing area.

Based on the second aspect, the second apparatus may deliver the first information to the first apparatus based on the reference data that is of the first sensing area and that is stored in the second apparatus, and assist the first apparatus in reporting a part (namely, second data) that is of sensed data (namely, the first data) and that is changed relative to existing data (namely, the reference data) of the second apparatus. Alternatively, the description is as follows: The second apparatus assists the first apparatus in extracting a small amount of key information (namely, the second data) that needs to be reported from the sensed data (namely, the first data). Alternatively, the description is as follows: Redundancy included in the first data is mined by using global data possessed by the second apparatus and interaction between the second apparatus and the first apparatus, to assist the first apparatus in performing data compression. This can greatly reduce an amount of data reported by the first apparatus, reduce transmission overheads of the first apparatus, and reduce consumption of an air interface resource.

In a possible design, the second data includes one or more of the following: incremental data and deleted data. The incremental data includes data that is in the first data and that is added compared with the first information, and the deleted data includes data that is in the first data and that is deleted compared with the first information.

Based on this possible design, for a changed environment, compared with the reference data stored in the second apparatus, in the first data sensed by the first apparatus, an object may be added or an object may be reduced. When reporting the second data to the second apparatus, the first apparatus may report the second data to the second apparatus in a manner of reporting the incremental data and the deleted data.

In a possible design, the second data further includes one or more of the following: an incremental data identifier or a deleted data identifier. The incremental data identifier indicates the incremental data, and the deleted data identifier indicates the deleted data.

Based on this possible design, the incremental data identifier and the deleted data identifier are added to the second data, so that the incremental data and the deleted data can be distinguished, and when the second apparatus restores the first data, the incremental data is added to the reference data, and the deleted data is removed from the reference data, to obtain the first data.

In a possible design, the first information includes reference quantization data. The reference quantization data is data obtained by quantizing the reference data by the second apparatus.

Based on this possible design, the second apparatus may quantize the reference data, to obtain the reference quantization data. Compared with delivering the reference data with a large data amount, delivering the reference quantization data can reduce a data amount of data (namely, the reference quantization data) sent by the second apparatus to the first apparatus, and reduce consumption of an air interface resource.

In a possible design, the first information further includes one or more of the following: first sensing area information, quantization precision of the reference quantization data, or data reporting precision. The data reporting precision includes one or more of the following: incremental data reporting precision or deleted data reporting precision.

Based on this possible design, the second apparatus indicates the first sensing area to the first apparatus, to ensure that the first apparatus and the second apparatus process data of a same sensing area (namely, the first sensing area).

In addition, the second apparatus indicates the quantization precision of the reference quantization data to the first apparatus, so that the first apparatus quantizes the first data to obtain the first quantization data. It is convenient for the first apparatus to compare the first quantization data and the reference quantization data that are at a same quantization level, and an amount of data processed according to an extraction algorithm can be reduced, a processing process can be simplified, and processing efficiency can be improved. In addition, an angle of view/location deviation between the first quantization data and the reference quantization data can be reduced. In this way, impact on accuracy of the second data caused by an angle of view/location deviation between the first data and the first information is reduced, and accuracy of the second data is improved.

In addition, the second apparatus indicates the data reporting precision to the first apparatus. Because the incremental data is data that is in data sensed by the first apparatus and that is added compared with the reference data, when the first apparatus reports the incremental data to the second apparatus, the first apparatus may report high-precision incremental data, so that the second apparatus reconstructs, based on the high-precision incremental data, an environment result having more detailed information. Because the deleted data is data that is deleted from the data sensed by the first apparatus compared with the reference data, the second apparatus already stores high-precision data corresponding to the deleted data. When reporting the deleted data to the second apparatus, the first apparatus may report low-precision deleted data, to reduce an amount of reported data and reduce consumption of an air interface resource.

In a possible design, the second apparatus receives the second data obtained through compression from the first apparatus.

Based on this possible design, the first apparatus sends the second data obtained through compression to the second apparatus, so that an amount of data reported by the first apparatus can be reduced, and consumption of an air interface resource can be reduced.

In a possible design, the second apparatus decompresses the second data obtained through compression, to obtain the second data, and determines the first data based on the second data and the reference data.

In a possible design, before the second apparatus sends the first information to the first apparatus, the second apparatus receives second information from the first apparatus, where the second information is used for the first sensing area.

Based on this possible design, the first apparatus sends the second information to the second apparatus, so that the second apparatus may determine, based on the second information, that a sensing area associated with the first apparatus is the first sensing area. In this way, when the second apparatus sends the first information to the first apparatus, the second apparatus may retrieve, based on the first sensing area, data of a similar and/or a same space range from existing global data of the second apparatus, to obtain reference data, and then send the first information to the first apparatus.

In a possible design, the second information includes one or more of the following: location information of the first apparatus, angle of view information of the first apparatus, sensing capability information of the first apparatus, and first sensing area information. The sensing capability information of the first apparatus indicates a sensing distance and/or sensing precision supported by the first apparatus, and the first sensing area information indicates the first sensing area.

Based on this possible design, a plurality of feasible solutions are provided for the first apparatus to indicate the first sensing area to the second apparatus by using the second information.

In a possible design, the second apparatus receives first indication information from the first apparatus. The first indication information indicates that data sent by the first apparatus is second data obtained through compression, or the first indication information indicates that data sent by the first apparatus is first data obtained through compression.

Based on this possible design, the first apparatus sends the first indication information to the second apparatus, so that the second apparatus can determine, based on the received first indication information, whether the extraction algorithm is successful. When the second apparatus determines that the extraction algorithm is successful, the second apparatus may decompress the received data to obtain the second data. When the second apparatus determines that the extraction algorithm fails, the second apparatus may decompress the received data to obtain the first data.

In a possible design, the second apparatus receives first segment data and remaining data amount information from the first apparatus through a first transmission resource, where the remaining data amount information indicates a data amount of second segment data, the first segment data and the second segment data are data obtained by segmenting the second data obtained through compression by the first apparatus based on the first transmission resource, and a transmission resource required by the first segment data is less than or equal to the first transmission resource.

In a possible design, the second apparatus receives the second segment data from the first apparatus through a second transmission resource.

Based on the foregoing two possible designs, when the transmission resource configured by the third apparatus is insufficient for the first apparatus to report the second data obtained through complete compression once, the first apparatus may perform resource scheduling and data reporting for a plurality of times.

In a possible design, the second apparatus receives Y layers of data and precision information from the first apparatus, where the Y layers of data are first Y layers of data in X layers of data, the X layers of data are data obtained by compressing the second data by the first apparatus, Y is less than or equal to X, a transmission priority of an i^{th} layer of data is higher than a transmission priority of an (i+1)^{th} layer of data, and 1≤i<X; and the precision information indicates data precision of the Y layers of data.

Based on this possible design, the first apparatus may perform layered compression on the second data, and preferentially report data (for example, the first Y layers of data) of high importance to the second apparatus.

According to a third aspect, an embodiment of this application provides a communication apparatus. The communication apparatus may be used in the first apparatus in the first aspect or the possible designs of the first aspect, to implement a function performed by the first apparatus. The communication apparatus may be a terminal device or a network device, or may be a chip, a system on chip, or the like of a network device or a terminal apparatus. The communication apparatus may perform, by hardware or by hardware executing corresponding software, the function performed by the first apparatus. The hardware or the software includes one or more modules corresponding to the foregoing functions, for example, a transceiver module and a processing module. The transceiver module is configured to receive first information, where the first information indicates reference data that is of a first sensing area and that is stored in a second apparatus. The processing module is configured to process first data based on the first information, to obtain second data, where the first data includes data sensed by a first apparatus in the first sensing area, and the second data includes data that is in the first data and that is changed compared with the first information. The transceiver module is further configured to send the second data to the second apparatus.

In a possible design, the second data includes one or more of the following: incremental data and deleted data. The incremental data includes data that is in the first data and that is added compared with the first information, and the deleted data includes data that is in the first data and that is deleted compared with the first information.

In a possible design, the second data further includes one or more of the following: an incremental data identifier or a deleted data identifier. The incremental data identifier indicates the incremental data, and the deleted data identifier indicates the deleted data.

In a possible design, the first information includes reference quantization data. The reference quantization data is data obtained by quantizing the reference data by the second apparatus.

In a possible design, the first information further includes one or more of the following: first sensing area information, quantization precision of the reference quantization data, or data reporting precision. The data reporting precision includes one or more of the following: incremental data reporting precision or deleted data reporting precision.

In a possible design, the processing module is specifically configured to: quantize the first data based on the quantization precision of the reference quantization data, to obtain first quantization data; determine second quantization data based on the reference quantization data and the first quantization data, where the second quantization data includes data that is in the first quantization data and that is changed compared with the reference quantization data; and determine the second data based on the second quantization data.

In a possible design, the transceiver module is further configured to: before receiving the first information, send second information to the second apparatus, where the second information indicates the first sensing area.

In a possible design, the second information includes one or more of the following: location information of the first apparatus, angle of view information of the first apparatus, sensing capability information of the first apparatus, and first sensing area information. The sensing capability information of the first apparatus indicates a sensing distance and/or sensing precision supported by the first apparatus, and the first sensing area information indicates the first sensing area.

In a possible design, the processing module is further configured to compress the second data based on the data reporting precision, to obtain second data obtained through compression. The transceiver module is further configured to send the second data obtained through compression to the second apparatus.

In a possible design, the transceiver module is further configured to: when a ratio of a data amount of the second data to a data amount of the first data is less than or equal to a first threshold, send the second data obtained through compression to the second apparatus.

In a possible design, the transceiver module is further configured to: when the ratio of the data amount of the second data to the data amount of the first data is greater than the first threshold, send first data obtained through compression to the second apparatus.

In a possible design, the transceiver module is further configured to send first indication information to the second apparatus. The first indication information indicates that data sent by the first apparatus is the second data obtained through compression, or the first indication information indicates that data sent by the first apparatus is the first data obtained through compression.

In a possible design, the transceiver module is further configured to: after the processing module processes the first data based on the first information to obtain the second data, send a resource request to a third apparatus, where the resource request includes a data amount of the second data obtained through compression. The transceiver module is further configured to receive a resource response from the third apparatus, where the resource response indicates a transmission resource configured by the third apparatus for the first apparatus. The transceiver module is further configured to send the second data obtained through compression to the second apparatus through the transmission resource.

In a possible design, the transceiver module is further configured to receive a first transmission resource configuration from a third apparatus, where the first transmission resource configuration indicates a first transmission resource. The processing module is further configured to: when the first transmission resource is less than a transmission resource required by the second data obtained through compression, segment, based on the first transmission resource, the second data obtained through compression, to obtain first segment data and second segment data, where a transmission resource required by the first segment data is less than or equal to the first transmission resource. The transceiver module is further configured to send the first segment data and remaining data amount information to the second apparatus through the first transmission resource, where the remaining data amount information indicates a data amount of the second segment data.

In a possible design, the transceiver module is further configured to receive a second transmission resource configuration from the third apparatus, where the second transmission resource configuration indicates a second transmission resource. The transceiver module is further configured to send the second segment data to the second apparatus through the second transmission resource.

In a possible design, the processing module is further configured to compress the second data to obtain X layers of data, where a transmission priority of an i^{th} layer of data is higher than a transmission priority of an (i+1)^{th} layer of data, and 1≤i<X. The transceiver module is further configured to send first Y layers of data of the X layers of data and precision information to the second apparatus, where Y is less than or equal to X, and the precision information indicates data precision of the first Y layers of data.

It should be noted that the modules in the third aspect or the possible designs of the third aspect can perform the corresponding functions in the method examples in the first aspect. For details, refer to the detailed descriptions in the method examples. For beneficial effect, refer to the related descriptions in the first aspect. Details are not described herein.

According to a fourth aspect, an embodiment of this application provides a communication apparatus. The communication apparatus may be used in the second apparatus in the second aspect or the possible designs of the second aspect, to implement a function performed by the second apparatus. The communication apparatus may be a terminal device, or may be a chip, a system on chip, or the like of a terminal device; or the communication apparatus may be a network device, or a chip, a system on chip, or the like of a network device; or the communication apparatus may be a server, or a chip, a system on chip, or the like of a server. The communication apparatus may perform, by hardware or by hardware executing corresponding software, the function performed by the second apparatus. The hardware or the software includes one or more modules corresponding to the foregoing functions, for example, a transceiver module and a processing module. The processing module is configured to determine first information. The transceiver module is configured to send the first information to a first apparatus, where the first information indicates reference data that is of a first sensing area and that is stored in a second apparatus. The transceiver module is further configured to receive second data from the first apparatus, where the second data includes data that is in the first data and that is changed compared with the first information, and the first data includes data sensed by the first apparatus in the first sensing area.

In a possible design, the second data includes one or more of the following: incremental data and deleted data. The incremental data includes data that is in the first data and that is added compared with the first information, and the deleted data includes data that is in the first data and that is deleted compared with the first information.

In a possible design, the second data further includes one or more of the following: an incremental data identifier or a deleted data identifier. The incremental data identifier indicates the incremental data, and the deleted data identifier indicates the deleted data.

In a possible design, the first information includes reference quantization data. The reference quantization data is data obtained by quantizing the reference data by the second apparatus.

In a possible design, the first information further includes one or more of the following: first sensing area information, quantization precision of the reference quantization data, or data reporting precision. The data reporting precision includes one or more of the following: incremental data reporting precision or deleted data reporting precision.

In a possible design, the transceiver module is specifically configured to receive second data obtained through compression from first apparatus.

In a possible design, the processing module is further configured to decompress the second data obtained through compression, to obtain the second data; and the processing module is further configured to determine the first data based on the second data and the reference data.

In a possible design, the transceiver module is further configured to: before sending the first information to the first apparatus, receive second information from the first apparatus, where the second information is used for the first sensing area.

In a possible design, the second information includes one or more of the following: location information of the first apparatus, angle of view information of the first apparatus, sensing capability information of the first apparatus, and first sensing area information. The sensing capability information of the first apparatus indicates a sensing distance and/or sensing precision supported by the first apparatus, and the first sensing area information indicates the first sensing area.

In a possible design, the transceiver module is further configured to receive first indication information from the first apparatus. The first indication information indicates that data sent by the first apparatus is the second data obtained through compression, or the first indication information indicates that data sent by the first apparatus is first data obtained through compression.

In a possible design, the transceiver module is further configured to receive first segment data and remaining data amount information from the first apparatus through a first transmission resource, where the remaining data amount information indicates a data amount of second segment data, the first segment data and the second segment data are data obtained by segmenting the second data obtained through compression by the first apparatus based on the first transmission resource, and a transmission resource required by the first segment data is less than or equal to the first transmission resource.

In a possible design, the transceiver module is further configured to receive the second segment data from the first apparatus through a second transmission resource.

In a possible design, the transceiver module is further configured to receive Y layers of data and precision information from the first apparatus, where the Y layers of data are first Y layers of data in X layers of data, the X layers of data are data obtained by compressing the second data by the first apparatus, Y is less than or equal to X, a transmission priority of an i^{th} layer of data is higher than a transmission priority of an (i+1)^{th} layer of data, and 1≤i<X; and the precision information indicates data precision of the Y layers of data.

It should be noted that the modules in the fourth aspect or the possible designs of the fourth aspect can perform the corresponding functions in the method examples in the second aspect. For details, refer to the detailed descriptions in the method examples. For beneficial effect, refer to the related descriptions in the second aspect. Details are not described herein.

According to a fifth aspect, an embodiment of this application provides a communication apparatus, where the communication apparatus includes one or more processors, and the one or more processors are configured to: run a computer program or instructions, or run a logic circuit, for the communication apparatus to perform the data transmission method according to any one of the first aspect and the possible designs of the first aspect, or for the communication apparatus to perform the data transmission method according to any one of the second aspect and the possible designs of the second aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In embodiments of this application, the processor and the memory may alternatively be integrated into one device. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixth aspect, an embodiment of this application provides a communication apparatus. The communication apparatus includes an input/output interface and a logic circuit. The input/output interface is configured to input and/or output information, so that the communication apparatus performs the data transmission method according to any one of the first aspect and the possible designs of the first aspect, or the communication apparatus performs the data transmission method according to any one of the second aspect and the possible designs of the second aspect.

According to a seventh aspect, an embodiment of this application provides a computer-readable storage medium. The computer-readable storage medium stores computer instructions or a program. When the computer instructions or the program is run on a computer, the computer is enabled to perform the data transmission method according to any one of the first aspect and the possible designs of the first aspect, or the computer is enabled to perform the data transmission method according to any one of the second aspect and the possible designs of the second aspect.

According to an eighth aspect, an embodiment of this application provides a computer program product including computer instructions. When the computer program product runs on a computer, the computer is enabled to perform the data transmission method according to any one of the first aspect and the possible designs of the first aspect, or the computer is enabled to perform the data transmission method according to any one of the second aspect and the possible designs of the second aspect.

According to a ninth aspect, an embodiment of this application provides a computer program. When the computer program is run on a computer, the computer is enabled to perform the data transmission method according to any one of the first aspect and the possible designs of the first aspect, or the computer is enabled to perform the data transmission method according to any one of the second aspect and the possible designs of the second aspect.

According to a tenth aspect, an embodiment of this application provides a communication apparatus, configured to perform the data transmission method according to any one of the first aspect and the possible designs of the first aspect, or configured to perform the data transmission method according to any one of the second aspect and the possible designs of the second aspect.

According to an eleventh aspect, a communication system is provided. The communication system may include the first apparatus according to the third aspect and the second apparatus according to the fourth aspect.

For technical effect brought by any one of the designs of the fifth aspect to the eleventh aspect, refer to the technical effect brought by any one of the first aspect and the second aspect.

### BRIEF DESCRIPTION OF DRAWINGS

FIG. 1 is a diagram of point cloud data according to an embodiment of this application;
FIG. 2 is a diagram of multi-device joint sensing according to an embodiment of this application;
FIG. 3 is a diagram of multi-device joint sensing according to an embodiment of this application;
FIG. 4 is a diagram of an octree structure according to an embodiment of this application;
FIG. 5 is a diagram of a communication system according to an embodiment of this application;
FIG. 6 is a diagram of a user plane protocol stack according to an embodiment of this application;
FIG. 7 is a diagram of composition of a communication apparatus according to an embodiment of this application;
FIG. 8 is an interaction diagram of a data transmission method according to an embodiment of this application;
FIG. 9 is a diagram of first information according to an embodiment of this application;
FIG. 10 is a diagram of composition of first information according to an embodiment of this application;
FIG. 11 is a diagram of a first sensing area according to an embodiment of this application;
FIG. 12 is an interaction diagram of a data transmission method according to an embodiment of this application;
FIG. 13 is a diagram of first data according to an embodiment of this application;
FIG. 14 is a diagram of second data according to an embodiment of this application;
FIG. 15 is a diagram of incremental data and deleted data according to an embodiment of this application;
FIG. 16 is a diagram of reporting incremental data and deleted data according to an embodiment of this application;
FIG. 17 is a diagram of composition of second data according to an embodiment of this application;
FIG. 18 is a diagram of an angle of view/location deviation between first data and reference data according to an embodiment of this application;
FIG. 19 is a diagram of extracting second data according to an embodiment of this application;
FIG. 20 is a diagram of first change data according to an embodiment of this application;
FIG. 21 is a diagram of second quantization data according to an embodiment of this application;
FIG. 22 is a diagram of second data according to an embodiment of this application;
FIG. 23 is a diagram of data reporting according to an embodiment of this application;
FIG. 24 is a diagram of reporting data and first indication information according to an embodiment of this application;
FIG. 25 is a diagram of data transmission according to an embodiment of this application;
FIG. 26 is a diagram of data reporting according to an embodiment of this application;
FIG. 27 is a diagram of composition of a communication apparatus according to an embodiment of this application; and
FIG. 28 is a diagram of a structure of a communication apparatus according to an embodiment of this application.

### DESCRIPTION OF EMBODIMENTS

Before embodiments of this application are described, technical terms used in embodiments of this application are described.

Point cloud data: The point cloud data may be a massive point set indicating a surface feature of a target object, a target area, a target environment, or the like. The point cloud data is an important form of air interface native data in wireless communication, and is widely applied to a scenario, for example, sensing-based environment reconstruction or imaging.

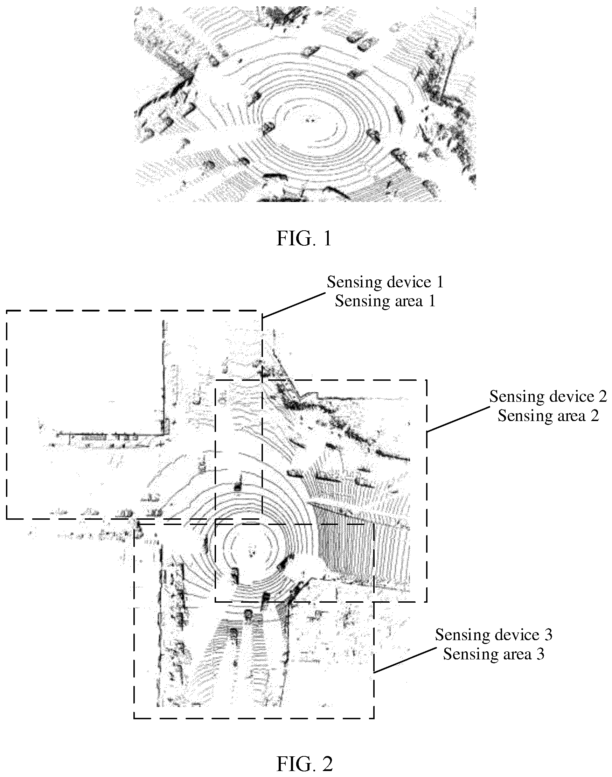

For example, as shown in FIG. 1, a street environment is used as an example. Point cloud data of the street environment may include a massive point set indicating a surface feature of all objects in the street environment.

During environment sensing, a single-device sensing manner may be used. One sensing device senses the environment, and transmits sensed point cloud data (or described as a sensing result, an imaging result, or the like) to a data fusion center (fusion center). The data fusion center may also be referred to as a center (Center) for short in data fusion. The data fusion center determines an environment result based on the received point cloud data. Alternatively, a multi-device joint sensing manner may be used. A plurality of sensing devices sense each area of an environment, and transmit, to a data fusion center, local point cloud data sensed by the plurality of sensing devices, and the data fusion center fuses the received point cloud data, to obtain a complete environment result.

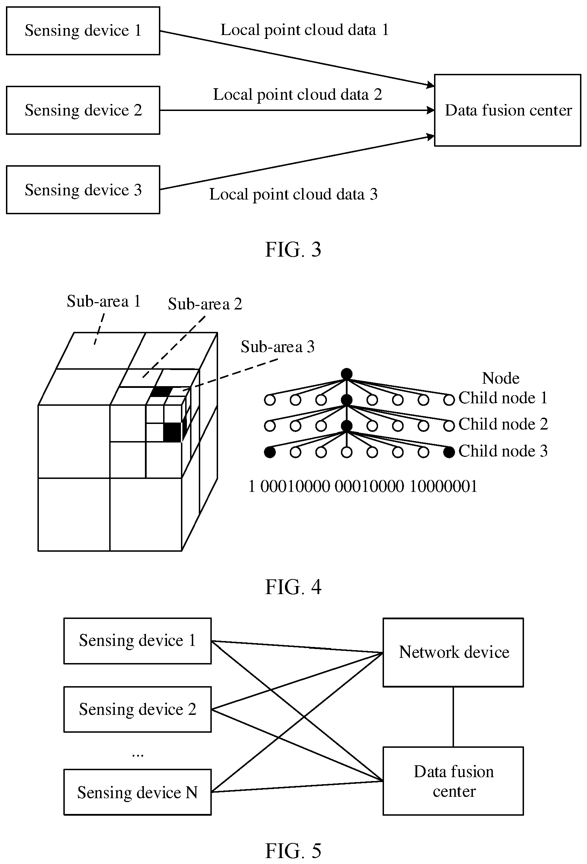

For example, as shown in FIG. 2 and FIG. 3, the sensing device includes a sensing device 1, a sensing device 2, and a sensing device 3. The sensing device 1 may sense a sensing area 1, to obtain local point cloud data 1, and transmit the local point cloud data 1 to the data fusion center. The sensing device 2 may sense a sensing area 2, to obtain local point cloud data 2, and transmit the local point cloud data 2 to the data fusion center. The sensing device 3 may sense a sensing area 3, to obtain local point cloud data 3, and transmit the data 3 to the data fusion center. The data fusion center fuses the local point cloud data 1, the local point cloud data 2, and the local point cloud data 3, to obtain a complete environment result.

Compared with a single-device sensing manner, in a multi-device joint sensing manner, each sensing device may observe a specific area from different locations and directions. Each sensing device needs to observe only one local area, and the sensing result may be summarized and fused into a complete environment result in the data fusion center, so that sensing and transmission overheads of a single sensing device can be reduced. In addition, each sensing device may focus on observing different area of interest to obtain a more refined environment result.

However, in a multi-device joint sensing manner, sensing areas for different sensing devices may overlap in space to some extent. As shown in FIG. 2, the sensing area 1 for the sensing device 1 overlaps the sensing area 2 for the sensing device 2, and the sensing area 3 for the sensing device 3 also overlaps the sensing area 2 for the sensing device 2. In addition, most static scenario information in a three-dimensional (3 dimensions, 3D) environment does not change with time. There is a large amount of repeated content (or described as a large amount of redundant data) between point cloud data sensed by each sensing device for a same sensing area at different moments. Repeated reporting of fixed repeated content wastes a large amount of air interface resources, and there is huge data compression space.

Based on this, the point cloud data (or described as point cloud location data or a location of a point) may be compressed by using an octree structure. That is, a sensing area may be evenly divided into eight sub-areas, and correspondingly, one node of the tree is expanded into eight child nodes, and each child node corresponds to one sub-area. Further, the sub-area in which the point cloud data exists is evenly divided into eight sub-areas, and this division operation is repeated, a location of the point cloud data in the sensing area is determined based on a value of each child node in the octree.

For example, as shown in FIG. 4, the sensing area may be evenly divided into eight sub-areas 1, and correspondingly, one node of the tree is expanded into eight child nodes 1, and each child node 1 corresponds to one sub-area 1. Further, the sub-area 1 in which the point cloud data exists is evenly divided into eight sub-areas 2, and the child node 1 in which the point cloud data exists is expanded into eight child nodes 2. The sub-area 2 in which the point cloud data exists is evenly divided into eight sub-areas 3, and the child node 2 in which the point cloud data exists is expanded into eight child nodes 3. It is assumed that a value of a node in which the point cloud data exists is set to 1, the compressed point cloud data may be represented as 1 00010000 00010000 10000001.

However, in the multi-device joint sensing manner, there is a large amount of redundancy between point cloud data sensed by each sensing device at each moment. Although the octree structure can be used to compress the point cloud data, an amount of data obtained through compression is still large, and a large amount of air interface resources are wasted, which is not suitable for transmission of air interface native data.

In conclusion, when the sensing device reports the point cloud data, how to compress the point cloud data to reduce consumption of an air interface resource becomes an urgent technical problem to be resolved.

To resolve the foregoing technical problem, embodiments of this application provide a data transmission method. The method may include: A first apparatus receives first information from a second apparatus, processes first data based on the first information to obtain second data, and sends the second data to the second apparatus, where the first information indicates reference data that is of a first sensing area and that is stored in the second apparatus, the first data includes data sensed by the first apparatus in the first sensing area, and the second data includes data that is in the first data and that is changed compared with the first information.

In this embodiment of this application, the second apparatus may deliver the first information to the first apparatus based on the reference data that is of the first sensing area and that is stored in the second apparatus, and assist the first apparatus in reporting a part (namely, second data) that is of sensed data (namely, the first data) and that is changed relative to existing data (namely, the reference data) of the second apparatus. Alternatively, the description is as follows: The second apparatus assists the first apparatus in extracting a small amount of key information (namely, the second data) that needs to be reported from the sensed data (namely, the first data). This can greatly reduce an amount of data reported by the first apparatus, reduce transmission overheads of the first apparatus, and reduce consumption of an air interface resource.

The following describes implementations of embodiments of this application in detail with reference to the accompanying drawings in this specification.

The data transmission method provided in embodiments of this application may be applied to any communication system. The communication system may be a 3rd generation partnership project (3rd generation partnership project, 3GPP) communication system, for example, a Long Term Evolution (long term evolution, LTE) system; may be a 5th generation (5th generation, 5G) mobile communication system, for example, a new radio (new radio, NR) communication system, or a vehicle to everything (vehicle to everything, V2X) system; may be applied to an LTE and 5G hybrid networking system, a non-terrestrial communication network (non-terrestrial network, NTN) system, a device-to-device (device-to-device, D2D) communication system, a machine-to-machine (machine-to-machine, M2M) communication system, an internet of things (internet of things, IoT), a universal mobile telecommunications system (universal mobile telecommunications system, UMTS) system, or a 6th generation (6th generation, 6G) communication system that is evolved after 5G; or may also be a short-distance wireless communication system, for example, a wireless fidelity (wireless fidelity, Wi-Fi) communication system, an ultra-wideband (ultra-wideband, UWB) communication system, or another non-3GPP communication system. This is not limited.

The communication system to which this application is applicable are merely examples for description, and communication system to which this application is applicable is not limited thereto. This is uniformly described herein, and details are not described below.

Embodiments of this application may be applied to a sensing scenario based on point cloud data, or may be applied to a sensing scenario based on other data (for example, data scanned by a vehicle-mounted radar), or may be applied to a sensing scenario based on 3D model data, or may be applied to a communication scenario, for example, an integrated sensing and communication service (or described as an ISAC service) or an auxiliary communication scenario (for example, auxiliary beam tracking, auxiliary driving, or autonomous driving). This is not limited.

The following uses FIG. 5 as an example to describe the communication system provided in embodiments of this application.

FIG. 5 is a diagram of a communication system according to an embodiment of this application. As shown in FIG. 5, the communication system may include one or more sensing devices, a data fusion center, and a network device.

The sensing device may be configured to sense an environment, and report a sensing result to the data fusion center. The data fusion center may be configured to perform fusion processing on sensing results reported by all sensing devices, to obtain an environment result (or described as an environment reconstruction result). The network device may be configured to provide a transmission resource (or described as an air interface resource) for communication between the sensing device and the data fusion center.

The data fusion center may be deployed on the network device, or may be deployed on a terminal device, or may be deployed independently of a network device or a terminal device. When the data fusion center is deployed independently of the network device or the terminal device, the sensing device may directly communicate with the data fusion center, or may communicate with the data fusion center by using the network device or the terminal device. This is not limited.

For example, the sensing device in FIG. 5 may be a device that can sense an environment, for example, a terminal device.

The terminal device may be a device having a wireless transceiver function, or a chip or a chip system that may be disposed in the device, and may be configured to sense an environment. The terminal device may also be referred to as user equipment (user equipment, UE), a terminal (terminal), a mobile station (mobile station, MS), a mobile terminal (mobile terminal, MT), or the like. For example, the terminal device may be a handheld device, a vehicle-mounted device having a wireless connection function, or the like, for example, a mobile phone (mobile phone), a tablet computer, a notebook computer, a palmtop computer, or a computer having a wireless transceiver function. Alternatively, the terminal device may be a mobile internet device (mobile internet device, MID), a wearable device, a virtual reality (virtual reality, VR) terminal, an augmented reality (augmented reality, AR) terminal, a wireless terminal in industrial control (industrial control), a wireless terminal in self driving (self driving), a wireless terminal in remote surgery (remote medical surgery), a wireless terminal in smart grid (smart grid), a wireless terminal in transportation safety (transportation safety), a wireless terminal in smart city (smart city), or a wireless terminal in smart home (smart home), a vehicle-mounted terminal, a vehicle with a vehicle-to-vehicle (vehicle-to-vehicle, V2V) communication capability, an intelligent networked vehicle, an unmanned aerial vehicle (unmanned aerial vehicle, UAV), a UAV may have a UAV-to-UAV (UAV-to-UAV, U2U) communication capability, a customer-premises equipment (customer-premises equipment, CPE), a smart point of sale (point of sale, POS) machine, a robot, a communication device on a high-altitude aircraft, a satellite terminal, and the like. This is not limited.

For example, the data fusion center in FIG. 5 may be a device, for example, a terminal device, a network device, a server, or a cloud server, that can implement fusion processing on a sensing result sent by a sensing device.

For example, the network device in FIG. 5 may be any device that is deployed in an access network and that can perform wireless communication with the sensing device and the data fusion center, and is mainly configured to implement functions such as radio physical control, resource scheduling and radio resource management, radio access control, and mobility management. Specifically, the network device may be a device supporting wired access, or may be a device supporting wireless access.

For example, the network device may be an access network (access network, AN) device/a radio access network (radio access network, RAN) device, and includes a plurality of AN/RAN nodes. The AN/RAN node may be: a base station (NodeB, NB), a macro base station, a micro base station, a relay station, an enhanced NodeB (enhanced NodeB, eNB), a next generation NodeB (NR NodeB, gNB), a home base station (for example, a home evolved NodeB (home evolved NodeB), a home NodeB (home NodeB, HNB)), a baseband unit (baseband unit, BBU), an access point (access point, AP), or a wireless fidelity AP (wireless fidelity AP, Wi-Fi AP), a transmission reception point (transmission reception point, TRP), a transmission point (transmission point, TP), a radio relay node, or a wireless backhaul node (namely, an IAB node) in an integrated access and backhaul (integrated access and backhaul, IAB) or another access node. The network device may alternatively be a central unit (central unit, CU)/distributed unit (distributed unit, DU). In this case, the network device may include two network elements: a CU and a DU, or the network device may be a control plane-user plane (control plane-user plane, CP-UP). In this case, the network device may include three network elements: a control plane (CU-CP) of the CU, a user plane (CU-UP) of the CU, and a DU. This is not limited.

In a possible implementation, the sensing device communicates with the data fusion center based on a protocol stack.

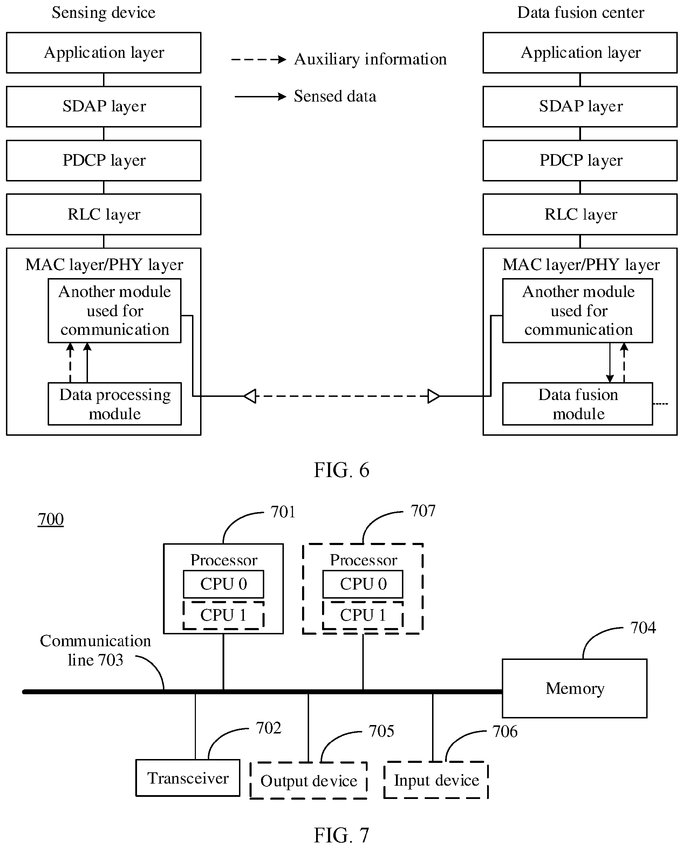

The protocol stack may include a control plane protocol stack and a user plane protocol stack. A user plane protocol stack is used as an example, as shown in FIG. 6, a structure of the user plane protocol stack may include a service data adaptation (service data adaptation protocol, SDAP) layer, a packet data convergence layer protocol (packet data convergence protocol, PDCP) layer, a radio link control (radio link control, RLC) layer, a media access control (media access link control, MAC) layer, a physical layer (physical layer, PHY), and the like. The physical layer is located at a lowest layer (or described as a layer 1), the MAC layer, the RLC layer, the PDCP layer, and the SDAP layer belong to a second layer (or described as a layer 2), and an application layer may be further included above the SDAP layer.

For a user plane protocol stack used for data transmission, as shown in FIG. 6, the MAC layer/PHY layer of the sensing device may include a data processing module (for example, performing a processing process such as extracting the second data from the first data based on the first information in the following embodiment) and another module used for communication, and the MAC layer/PHY layer of the data fusion center may include a data fusion module and another module used for communication. The MAC layer/PHY layer of the data fusion center may send the auxiliary information (that is, information used to assist the sensing device in processing sensed data such as the first information in the following embodiment) to the sensing device. The data processing module of the sensing device may process the auxiliary information and the sensed data (such as the first data in the following embodiment) at the MAC layer/PHY layer to obtain a processing result (for example, the second data in the following embodiment), and send the processing result to the data fusion center. The data fusion module of the data fusion center performs, based on the auxiliary information, fusion processing on processing results sent by the sensing devices, to obtain an environment result. In a possible implementation, the data fusion center may send the environment result to an application layer (for example, in a vehicle to everything scenario), or may not send the environment result to the application layer, and apply the environment result to a network (for example, assisting in resource scheduling at the MAC layer and beam tracking at the PHY layer).

It should be noted that the foregoing uses only FIG. 6 as an example to describe the user plane protocol stack, and does not constitute a limitation on a structure of the user plane protocol stack.

The sensing device, the data fusion center, and the network device in embodiments of this application may be one or more chips, or may be a system on chip (system on chip, SOC), or the like. FIG. 5 is only an example accompany drawing, and a quantity of devices included in FIG. 5 is not limited. In addition, in addition to the devices shown in FIG. 5, the communication system may further include another device. Names of the devices and the links in FIG. 5 are not limited. In addition to the names shown in FIG. 5, the devices and the links may alternatively have other names. This is not limited.

During specific implementation, the device shown in FIG. 5 is: Each sensing device, the data fusion center, and the network device may use a composition structure shown in FIG. 7, or include components shown in FIG. 7. FIG. 7 is a diagram of composition of a communication apparatus 700 according to an embodiment of this application. The communication apparatus 700 may be a terminal device, a chip or a system on chip in the terminal device; or may be a network device, or a chip or a system on chip in the network device. As shown in FIG. 7, the communication apparatus 700 includes a processor 701, a transceiver 702, and a communication line 703.

Optionally, the communication apparatus 700 may further include a memory 704. The processor 701, the memory 704, and the transceiver 702 may be connected through the communication line 703.

The processor 701 is a central processing unit (central processing unit, CPU), a baseband processor, a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 701 may be another apparatus having a processing function, for example, a circuit, a device, or a software module. This is not limited.

The transceiver 702 is configured to communicate with another device or another communication network. The another communication network may be the Ethernet, a RAN, a wireless local area network (wireless local area network, WLAN), or the like. The transceiver 702 may be an input/output interface, a module, a circuit, a transceiver, or any apparatus that can implement communication.

The communication line 703 is configured to transmit information between the components included in the communication apparatus 700.

The memory 704 is configured to store instructions. The instructions may be a computer program.

The memory 704 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 704 may be independent of the processor 701, or may be integrated with the processor 701. The memory 704 may be configured to store instructions, program code, some data, or the like. The memory 704 may be located inside the communication apparatus 700, or may be located outside the communication apparatus 700. This is not limited. The processor 701 is configured to execute the instructions stored in the memory 704, to implement the data transmission method provided in the following embodiments of this application.

In an example, the processor 701 may include one or more CPUs, for example, a CPU 0 and a CPU 1 in FIG. 7.

In an optional implementation, the communication apparatus 700 includes a plurality of processors. For example, in addition to the processor 701 in FIG. 7, the communication apparatus 700 may further include a processor 707.

In an optional implementation, the communication apparatus 700 may further include an output device 705 and an input device 706. For example, the input device 706 is a device, for example, a keyboard, a mouse, a microphone, or a joystick, and the output device 705 is a device, for example, a display or a speaker (speaker).

It should be noted that the communication apparatus 700 may be a desktop computer, a portable computer, a network server, a mobile phone, a tablet computer, a wireless terminal, an embedded device, a chip system, or a device having a structure similar to that in FIG. 7. In addition, a composition structure shown in FIG. 7 does not constitute a limitation on the communication apparatus. In addition to the components shown in FIG. 7, the communication apparatus may include more or fewer components than those shown in the figure, or a combination of a part of the components, or an arrangement of different components.

In this embodiment of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are only examples. Other names may alternatively be used during specific implementation. This is not limited.

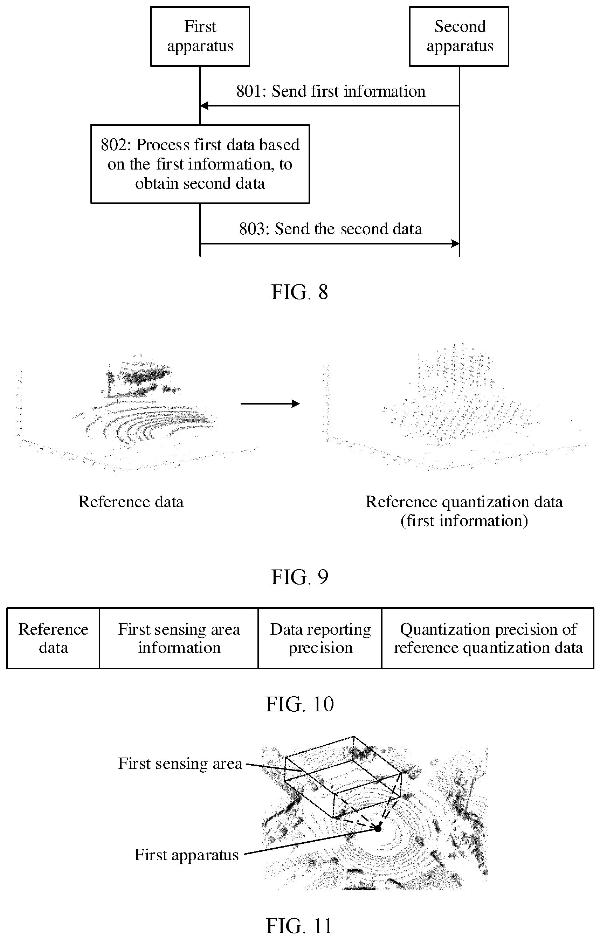

With reference to the communication system shown in FIG. 5, refer to FIG. 8, a data transmission method provided in an embodiment of this application is described. The first apparatus may be any sensing device in the communication system shown in FIG. 5, the second apparatus may be any data fusion center in the communication system shown in FIG. 5, and the third apparatus may be any network device in the communication system shown in FIG. 5. The first apparatus, the second apparatus, and the third apparatus described in the following embodiments may all have components shown in FIG. 7. Processing performed by a single execution body (the first apparatus, the second apparatus, or the third apparatus) shown in embodiments of this application may alternatively be performed by a plurality of execution bodies. These execution bodies may be logically and/or physically separated. This is not limited.

FIG. 8 is an interaction diagram of a data transmission method according to an embodiment of this application. As shown in FIG. 8, the method may include the following steps.

Step 801: A second apparatus sends first information to a first apparatus. Correspondingly, the first apparatus receives the first information from the second apparatus.

The first information may indicate reference data that is of a first sensing area and that is stored in the second apparatus.

The first sensing area may be a sensing area associated with the first apparatus, or described as a sensing area sensed by the first apparatus, or described as an area associated with a sensing result reported by the first apparatus, or described as an area associated with reference data indicated by the second apparatus.

In a possible implementation, the second apparatus retrieves, based on the first sensing area associated with the first apparatus, data of a similar and/or a same space range from existing global data of the second apparatus, to obtain the reference data.

In a first example, the reference data may include high-precision data that is of the first sensing area and that is stored in the second apparatus.

The high-precision data that is of the first sensing area and that is stored in the second apparatus may be data that is obtained by the first apparatus or another sensing apparatus by sensing the first sensing area and that is sent to the second apparatus. The second apparatus may reconstruct high-precision data of the first sensing area based on a sensing result of the first apparatus and/or another sensing apparatus. The second apparatus may save a reconstructed environment result as the reference data of the first sensing area.

For example, the first apparatus may sense the first sensing area, obtain a sensing result of the first sensing area, and send the sensing result to the second apparatus. The second apparatus reconstructs an environment result of the first sensing area (namely, high-precision data) based on the received sensing result of the first sensing area.

Alternatively, a fourth apparatus may sense the first sensing area, obtain a sensing result of the first sensing area, and send the sensing result to the second apparatus. The second apparatus reconstructs an environment result of the first sensing area (namely, high-precision data) based on the received sensing result of the first sensing area. The fourth apparatus may be a sensing device other than the first apparatus.

The second apparatus may further indicate the reference data of the first sensing area to the first apparatus when the first apparatus reports the sensing result of the first sensing area next time, to assist the first apparatus in reporting, to the second apparatus, a part that is in the sensed data and that is changed relative to the reference data. The second apparatus may further update the reference data based on data (namely, high-precision data) reported by the first apparatus.

In a second example, the reference data may include low-precision data that is of the first sensing area and that is stored in the second apparatus.

The low-precision data may be data determined by quantizing the high-precision data of the first sensing area, or may be partial data extracted from the high-precision data of the first sensing area. For example, model data of a static object extracted from the high-precision data of the first sensing area is used as the low-precision data. This is not limited.

In a possible implementation, the second apparatus reconstructs the environment result of the first sensing area based on the sensing result reported by the first apparatus, extracts the model data, and saves the model data as the reference data.

Based on the foregoing two examples, the second apparatus may indicate the reference data of the first sensing area to the first apparatus based on the first information.

In a first possible design, the first information includes reference quantization data. The reference quantization data may be data obtained by quantizing the reference data by the second apparatus.

For example, as shown in FIG. 9, the second apparatus may quantize the reference data based on reference quantization precision, to obtain the reference quantization data. Compared with delivering the reference data with a large data amount, delivering the reference quantization data can reduce a data amount of data (namely, the reference quantization data) sent by the second apparatus to the first apparatus, and reduce consumption of an air interface resource.

The reference quantization precision may be pre-specified in a protocol, or may be determined by the second apparatus. This is not limited.

For example, the foregoing protocol may be a 3GPP protocol, for example, an LTE protocol or an NR protocol, or may be an Institute of Electrical and Electronics Engineers (Institute of Electrical and Electronics Engineers, IEEE) protocol, for example, 802.11. This is not limited.

In a possible implementation, the second apparatus compresses the reference quantization data, and sends the reference quantization data obtained through compression as the first information to the first apparatus. Compared with delivering the reference quantization data, delivering the reference quantization data obtained through compression may further reduce a data amount of data sent by the second apparatus, and reduce consumption of an air interface resource.

In a second possible design, the first information includes rough model data.

The rough model data may be partial data extracted from the reference data, for example, geometric contour data extracted from the static object as the first information. This is not limited.

Compared with delivering a reference data amount with a large data amount, extracting the rough model data from the reference data by the second apparatus can reduce a data amount of data (namely, the rough model data) sent by the second apparatus to the first apparatus, and reduce consumption of an air interface resource.

In a possible implementation, the second apparatus compresses the rough model data, and sends the rough model data obtained through compression as the first information to the first apparatus. Compared with delivering the rough model data, delivering the rough model data obtained through compression may further reduce a data amount of data sent by the second apparatus, and reduce consumption of an air interface resource.

In this embodiment of this application, the first information may also be referred to as auxiliary information, side information (side information), low-precision side information, key data in reference data, or the like. This is not limited.

In a possible implementation, the first information may further include one or more of the following: first sensing area information, quantization precision of the reference quantization data, or data reporting precision. For example, as shown in FIG. 10,
the first sensing area information may indicate the first sensing area. The second apparatus indicates the first sensing area to the first apparatus, so that the second apparatus may indicate, to the first apparatus, that the first information sent by the second apparatus indicates the reference data of the first sensing area, and the first apparatus may also report the sensing result of the first sensing area when reporting the sensing result to the second apparatus, thereby ensuring that the first apparatus and the second apparatus process data of a same sensing area (namely, the first sensing area).

For example, the first sensing area information may include all vertex coordinates of the first sensing area.

For example, as shown in FIG. 11, the first sensing area is a cuboid area. The first sensing area information may include all vertex coordinates of the cuboid area.

In still another example, the second apparatus may indicate, to the first apparatus in a space tree manner, an area that is in an environment and for which reporting does not need to be performed by the first apparatus. That is, the first sensing area information may include information about the area that is in the environment and for which reporting does not need to be performed by the first apparatus. The first apparatus may determine, based on the environment and the information about the area that is in the environment and for which reporting does not need to be performed by the first apparatus, an area that is in the environment and for which reporting needs to be performed by the first apparatus, that is, determine the first sensing area.

For example, an environment is divided into 16 sub-areas in a space tree manner. A value of the sub-area may be set to 1 to indicate that the sub-area is an area for which reporting needs to be performed by the first apparatus, or a value of the sub-area may be set to 0 to indicate that the sub-area is an area for which reporting does not need to be performed by the first apparatus. The first apparatus determines an area for which reporting needs to be performed based on a value of each sub-area, that is, determines the first sensing area.

The data reporting precision may include one or more of the following: incremental data reporting precision or deleted data reporting precision. The second apparatus indicates the data reporting precision to the first apparatus, so that the first apparatus can report the sensing result to the second apparatus based on the data reporting precision.

For example, when the first apparatus senses the first sensing area, a part that is in the sensed data and that is changed relative to the reference data may include data added compared with the reference data (namely, incremental data), or may include data deleted compared with the reference data (namely, deleted data). Based on this, the data reporting precision may include the incremental data reporting precision and the deleted data reporting precision.

In a possible implementation, the incremental data reporting precision is greater than or equal to the deleted data reporting precision. Because the incremental data is data that is in data sensed by the first apparatus and that is added compared with the reference data, when the first apparatus reports the incremental data to the second apparatus, the first apparatus may report high-precision incremental data, so that the second apparatus reconstructs, based on the high-precision incremental data, an environment result having more detailed information. Because the deleted data is data that is deleted from the data sensed by the first apparatus compared with the reference data, the second apparatus already stores high-precision data corresponding to the deleted data. When reporting the deleted data to the second apparatus, the first apparatus may report low-precision deleted data, to reduce an amount of reported data and reduce consumption of an air interface resource. The second apparatus may determine, from the stored reference data based on the low-precision deleted data, the high-precision data corresponding to the deleted data, so that the high-precision data corresponding to the deleted data can be deleted when an environment result is reconstructed.

In a possible implementation, the deleted data reporting precision is less than or equal to data precision of the first information. Because the deleted data is data that is in the data sensed by the first apparatus and that is deleted compared with the reference data, that is, the data sensed by the first apparatus does not include the deleted data, and the deleted data actually exists in the first information indicating the reference data, highest reporting precision of the deleted data is equal to the data precision of the first information.

In addition, when the first apparatus reports the deleted data to the second apparatus, because the second apparatus already stores the high-precision data corresponding to the deleted data, the first apparatus may further quantize the deleted data, to reduce the amount of reported data. In this case, the reporting precision of the deleted data may alternatively be less than the data precision of the first information.

In a possible implementation, the data reporting precision may be included in the first information and sent to the first apparatus, or may be pre-negotiated by the first apparatus and the second apparatus, or may be determined by the first apparatus based on capability information of the first apparatus without being indicated by the second apparatus.

In a possible implementation, when the first apparatus is a terminal device, and the second apparatus is a data fusion center deployed on a network device, the network device may deliver the first information as RAN native data to the terminal device through an air interface.

For example, the network device separately allocates an air interface resource at a physical layer, and delivers the first information to the terminal device through the air interface resource. In this example, the network device needs to separately allocate a physical layer resource and perform a modulation and coding scheme (modulation and coding scheme, MCS) indication for the terminal device.

In still another example, the network device delivers the first information to the terminal device in a manner of multiplexing upper-layer application data and in a form of a media access control control element (media access control control element, MAC CE), which may be implemented by modifying or extending a MAC header (MAC header). In this example, the network device does not need to separately perform resource and MCS indication for the terminal device.

In a possible implementation, before the second apparatus sends the first information to the first apparatus, the second apparatus further receives second information sent by the first apparatus, and determines the first sensing area based on the second information.

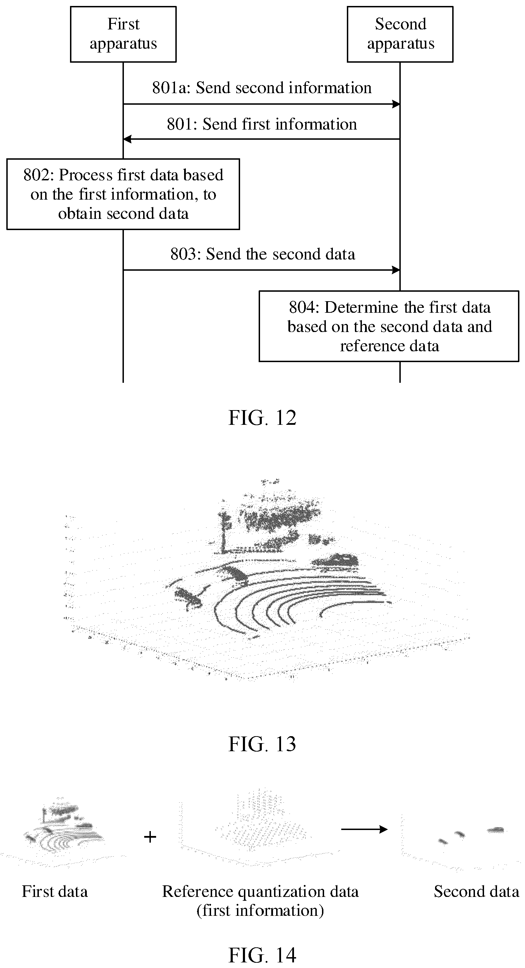

For example, as shown in FIG. 12, the first apparatus may perform the following step 801a, to indicate the first sensing area to the second apparatus.

Step 801a: The first apparatus sends the second information to the second apparatus; and correspondingly, the second apparatus receives the second information from the first apparatus. The second information may indicate the first sensing area.

It should be noted that, in this embodiment of this application, an example in which a sensing area reported by the first apparatus and a sensing area delivered by the second apparatus each are the first sensing area is used for description. It may be understood that the sensing area reported by the first apparatus may also be an area that is greater than the first sensing area and includes the first sensing area, that is, the second information may also indicate a second sensing area, and the second sensing area is greater than the first sensing area and includes the first sensing area. This is not limited.

The following describes the second information by using an example in which the second information indicates the first sensing area. For a description that the second information indicates the second sensing area, refer to the following related description that the second information indicates the first sensing area. Details are not described.

In a possible implementation, the second information may include one or more of the following: location information of the first apparatus, angle of view information of the first apparatus, sensing capability information of the first apparatus, and first sensing area information.

The angle of view information of the first apparatus may include information such as a direction, a horizontal angle of view, and a tilt angle of view of the first apparatus.

The sensing capability information of the first apparatus may indicate a sensing distance and/or sensing precision supported by the first apparatus. The sensing distance may be a maximum distance that can be sensed by the first apparatus on the basis of meeting sensing precision. A shorter distance from the first apparatus indicates higher precision of data sensed by the first apparatus, and a longer distance from the first apparatus indicates lower precision of data sensed by the first apparatus. The sensing distance supported by the first apparatus may be determined based on a data precision requirement. The sensing precision may indicate a precision range of data sensed by the first apparatus within the sensing distance. For example, the sensing precision may include maximum precision (or described as highest precision), minimum precision (or described as lowest precision), and the like. This is not limited.

For example, a representation unit of precision may be a size of an area represented by data. A smaller area represented by the data indicates higher precision of the data, and a larger area represented by the data indicates lower precision of the data.

The first sensing area information indicates the first sensing area.

Based on the foregoing descriptions of the second information, the first sensing area associated with the first apparatus may be indirectly determined based on the location information of the first apparatus, the angle of view information of the first apparatus, and the sensing capability information of the first apparatus; or the first sensing area associated with the first apparatus may be directly determined based on the first sensing area information. This is not limited.

For example, the first apparatus may indicate the first sensing area shown in FIG. 11 to the second apparatus based on the second information.

The first apparatus sends the second information to the second apparatus, so that the second apparatus may determine, based on the second information, that a sensing area associated with the first apparatus is the first sensing area. In this way, when the second apparatus sends the first information to the first apparatus based on the foregoing step 801, the second apparatus may retrieve, based on the first sensing area, data of a similar and/or a same space range from existing global data of the second apparatus, to obtain reference data, and then send the first information to the first apparatus.

During specific implementation, due to impact by precision of the location information of the first apparatus, or precision of the angle of view information of the first apparatus, or precision of the sensing capability information of the first apparatus, or precision of the first sensing area information, although the second apparatus determines, based on the second information, the first sensing area as much as possible, a specific angle of view/location deviation may still exist between the first sensing area determined by the second apparatus based on the second information and the first sensing area indicated by the first apparatus. Alternatively, when the second apparatus determines the reference data based on the determined first sensing area, although the second apparatus retrieves, based on the first sensing area, the reference data as much as possible, a specific location deviation may still exist between a first sensing area corresponding to reference data obtained through retrieval and the first sensing area indicated by the first apparatus, and a specific deviation may also exist between an angle of view of the reference data obtained through retrieval and an angle of view sensed by the first apparatus.

Based on the foregoing description, when sending the first information to the first apparatus, the second apparatus may indicate, to the first apparatus, the first sensing area determined by the second apparatus (which may be the first sensing area determined by the second apparatus based on the second information, or may be the first sensing area corresponding to the reference data, which is not limited), to attempt to overcome an angle of view/location deviation.

It may be understood that the second apparatus may not indicate the first sensing area to the first apparatus, that is, the first apparatus considers by default that the first information sent by the second apparatus indicates the reference data of the first sensing area.

In a possible implementation, for the reference data indicated by the second apparatus to the first apparatus based on the first information, the second apparatus may further update the reference data in any one of the following three manners.

Manner 1: The second apparatus may update the reference data based on a sensing result reported by the first apparatus each time.

The second apparatus updates the reference data each time after receiving the sensing result, so that a changed part between the reference data and the data sensed by the first apparatus can be reduced, thereby reducing a data amount of the sensing result reported by the first apparatus based on the reference data, reducing transmission overheads of the first apparatus, and reducing a waste of an air interface resource.

Manner 2: The second apparatus may periodically update the reference data based on the sensing result reported by the first apparatus.

The second apparatus periodically updates the reference data, so that an update frequency of the reference data can be reduced, and power consumption of the second apparatus caused by updating the reference data can be reduced.

For example, a periodicity for updating the reference data by the second apparatus may be predefined in a protocol, or may be customized by the second apparatus. This is not limited.

Manner 3: The second apparatus may determine, based on a data amount of the sensing result reported by the first apparatus, whether to update the reference data.

For example, when the data amount of the sensing result reported by the first apparatus is greater than a first data amount, it may indicate that there is much changed data in the current environment. The second apparatus may frequently update the reference data, to reduce a changed part between the reference data and the data sensed by the first apparatus, reduce a data amount reported by the first apparatus each time, and reduce transmission overheads.

When the data amount of the sensing result reported by the first apparatus is less than a second data amount, it may indicate that there is little changed data in the current environment, so that an update frequency of the reference data can be reduced, and power consumption of the second apparatus caused by updating the reference data can be reduced.

The first data amount may be greater than or equal to the second data amount.

In a possible implementation, the first data amount and the second data amount are pre-specified in a protocol, or are negotiated by the first apparatus and the second apparatus, or are determined by the first apparatus or the second apparatus. This is not limited.

Step 802: The first apparatus processes first data based on the first information, to obtain second data.

The first apparatus may sense the first sensing area, and sensed data is the first data, or the first data includes data sensed by the first apparatus in the first sensing area.

For example, the first apparatus may sense the first sensing area shown in FIG. 11, to obtain the first data shown in FIG. 13.

After sensing the first data, the first apparatus may process the first data based on the first information, to obtain data that is in the first data and that is changed compared with the first information, that is, obtain the second data. Alternatively, the second data includes data that is in the first data and that is changed compared with the first information, or the second data includes data that is in the first data and that is changed compared with the reference data indicated by the first information, or the second data includes data that is in the first data and that is changed compared with the reference data. This is not limited.

For example, as shown in FIG. 14, the first apparatus may determine, from the first data shown in FIG. 13 based on the first information shown in FIG. 9, second data that is in the first data and that is changed compared with the first information. For example, the second data may include data that may change, such as a moving vehicle on a road.

In a possible implementation, the second data includes one or more of the following: incremental data and deleted data.

The incremental data may include data that is in the first data and that is added compared with the first information, and the deleted data may include data that is in the first data and that is deleted compared with the first information. Specifically, for a changed environment, compared with the reference data stored in the second apparatus, in the first data sensed by the first apparatus, an object may be added or an object may be reduced. When reporting the second data to the second apparatus, the first apparatus may report the second data to the second apparatus in a manner of reporting the incremental data and the deleted data.

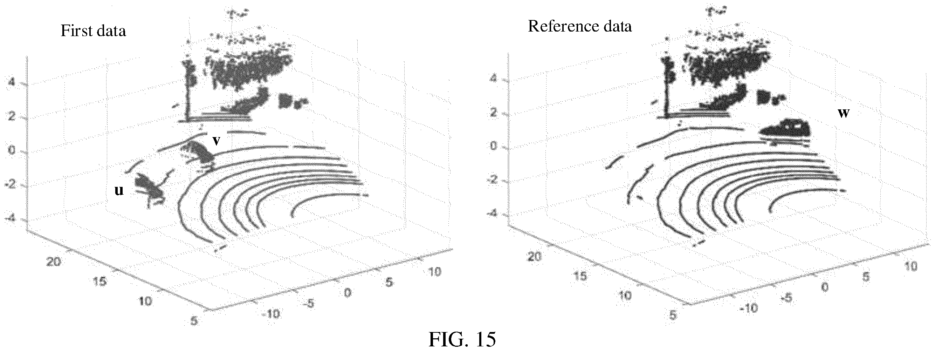

For example, as shown in FIG. 15, the reference data stored in the second apparatus does not include data corresponding to an object u and data corresponding to an object v. However, when the first apparatus senses the first sensing area, the object u and the object v appear in the first sensing area. In this case, the data corresponding to the object u and the data corresponding to the object v belong to the incremental data.

For another example, as shown in FIG. 15, a vehicle w that is parked on a roadside for a long time is present in the reference data stored in the second apparatus. However, when the first apparatus senses the first sensing area, the vehicle w leaves the first sensing area. In this case, data corresponding to the vehicle w belongs to the deleted data.

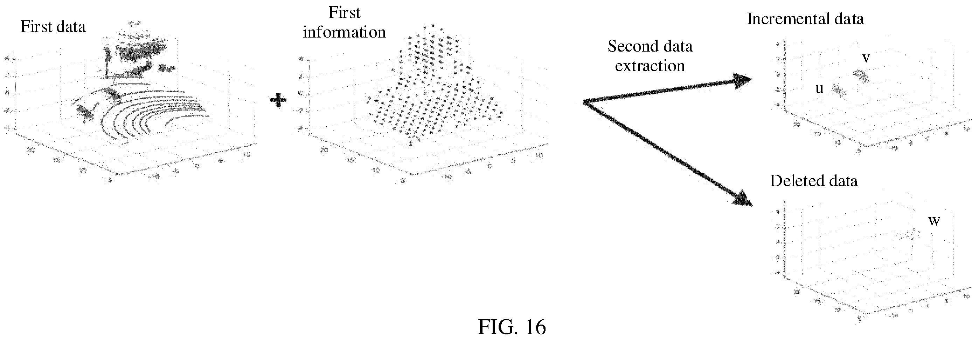

For still another example, as shown in FIG. 16, when the first apparatus determines the second data based on the first data and the first information and reports the second data to the second apparatus, the first apparatus may report the data corresponding to the object u and the data corresponding to the object v as the incremental data, and report the data corresponding to the vehicle w as the deleted data.

In a possible implementation, the second data further includes one or more of the following: an incremental data identifier and a deleted data identifier. The incremental data identifier may indicate the incremental data, and the deleted data identifier may indicate the deleted data.

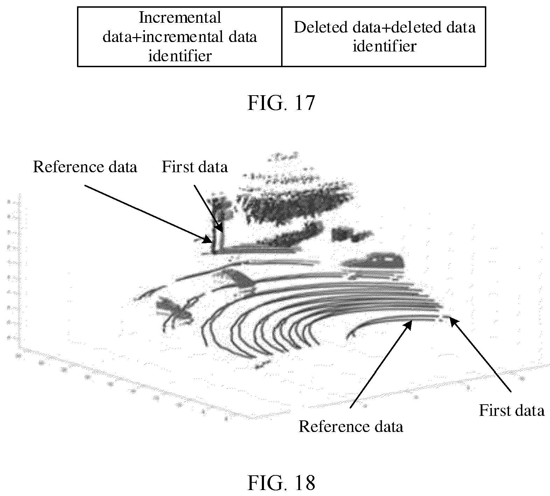

For example, as shown in FIG. 17, when the first apparatus reports the second data to the second apparatus, the incremental data identifier may be added to a part being incremental data, and the deleted data identifier may be added to a part being deleted data, to distinguish the incremental data from the deleted data.

In yet another example, when the first apparatus reports the second data to the second apparatus, one piece of identification information may be added between the incremental data and the deleted data, where data before the identification information is the incremental data, and data after the identification information is the deleted data; or data before the identification information is the deleted data, and data after the identification information is the incremental data, to distinguish the incremental data from the deleted data.

In still another possible implementation, different from the foregoing distinguishing between the incremental data and the deleted data based on the identifier, the incremental data and the deleted data are distinguished through a transmission resource of the incremental data and a transmission resource of the deleted data. When reporting the second data to the second apparatus, the first apparatus may separately report the incremental data and the deleted data through different transmission resources, to distinguish the incremental data from the deleted data based on a transmission resource. For example, the incremental data is transmitted on a first resource, the deleted data is transmitted on a second resource, and the first resource is different from the second resource. Optionally, a correspondence between a transmission resource and a data type may be predetermined in a protocol, or may be configured by the first apparatus and/or the second apparatus.

Based on the foregoing descriptions of the second data, the first apparatus may extract the second data from the first data according to a highly robust change information extraction algorithm (hereinafter referred to as an extraction algorithm) based on the low-precision first information.

Because there may be an angle of view/location deviation between the first sensing area sensed by the first apparatus and the first sensing area corresponding to the reference data determined by the second apparatus, as shown in FIG. 18, there may also be an angle of view/location deviation between the first data sensed by the first apparatus and the reference data determined by the second apparatus.

When the second apparatus indicates the reference data to the first apparatus, the low-precision first information indicates the reference data, so that an angle of view/location deviation between the first data and the first information can be reduced, thereby reducing impact of the angle of view/location deviation between the first data and the first information on accuracy of the second data, and improving accuracy of the second data.

In addition, the first apparatus extracts the second data from the first data according to the extraction algorithm, so that impact of an angle of view/location deviation between the first data and the first information on accuracy of the second data can be reduced, and accuracy of the second data can be improved.

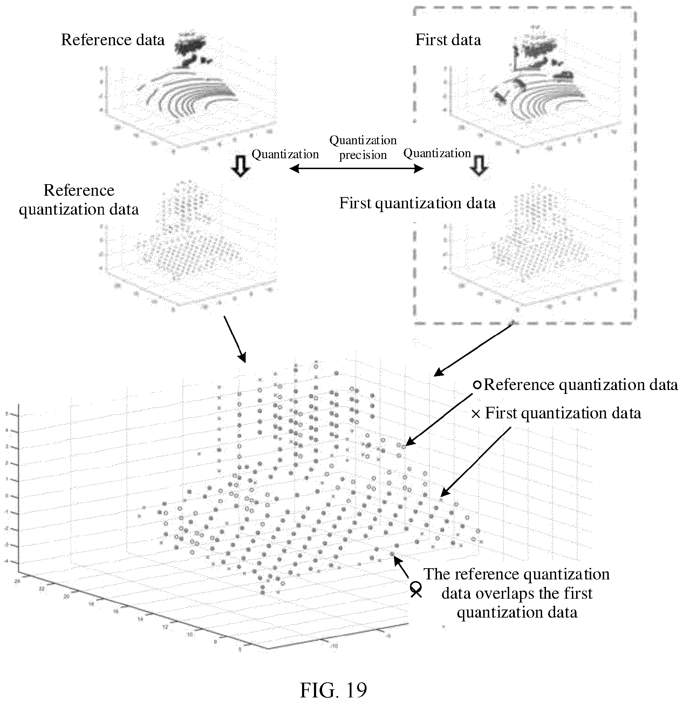

For example, the first information includes reference quantization data. As shown in FIG. 19, when extracting the second data from the first data according to the extraction algorithm, the first apparatus may quantize the first data based on quantization precision of the reference quantization data, to obtain first quantization data; determine second quantization data by comparing the reference quantization data with the first quantization data; and determine the second data based on the second quantization data.

The second quantization data may include data that is changed in comparison between the first quantization data and the reference quantization data.

For example, the second quantization data may include data (for example, added data) that is in the first quantization data and that is changed compared with the reference quantization data, or may include data (for example, deleted data) that is in the reference quantization data and that is changed compared with the first quantization data.

Because there may be an angle of view/location deviation between the first data and the first information (for example, the reference quantization data), the first apparatus quantizes the first data based on quantization precision of the reference quantization data. It is convenient to compare the first quantization data and the reference quantization data that are at a same quantization level, and an amount of data processed according to an extraction algorithm can be reduced, a processing process can be simplified, and processing efficiency can be improved. In addition, an angle of view/location deviation between the first quantization data and the reference quantization data can be reduced. In this way, impact on accuracy of the second data caused by an angle of view/location deviation between the first data and the first information is reduced, and accuracy of the second data is improved.

The following describes in detail a process in which the first apparatus determines the incremental data and the deleted data based on the first quantization data and the reference quantization data according to the extraction algorithm by using an example in which the second data includes the incremental data and the deleted data.

In a first possible design, the first apparatus may remove (or described as eliminate or delete) data that is in the first quantization data and that is not changed compared with the reference quantization data, to obtain first change data, extend the first change data to obtain the second quantization data, and determine the incremental data based on the second quantization data.

The second quantization data may include data that is in the first quantization data and that is added compared with the reference quantization data.

For example, the first apparatus may determine, in a neighboring area determining manner, a size of a first neighboring area based on a removal threshold, and determine, for each piece of data in the first quantization data, whether one or more pieces of data in the reference quantization data exist in a first neighboring area of the data. When determining that the one or more pieces of data in the reference quantization data exist in the first neighboring area of the data, the first apparatus may remove the data from the first quantization data, to obtain the first change data.

A value of the removal threshold may be a positive integer, and a specific value of the removal threshold may be preconfigured by the second apparatus for the first apparatus, or may be customized by the first apparatus. This is not limited.

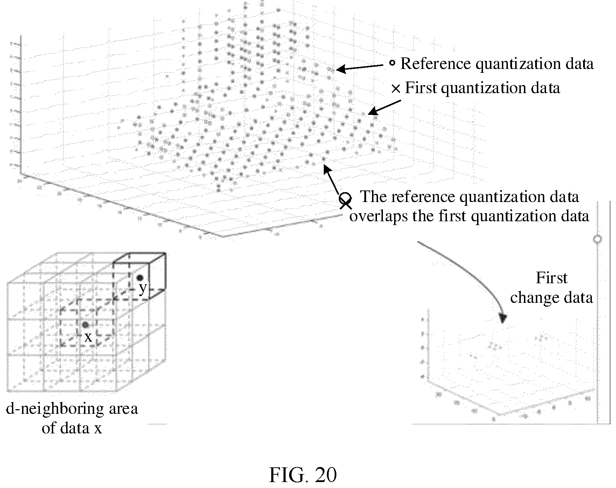

For example, as shown in FIG. 20, a value of the removal threshold is d. It may be determined that the first neighboring area is a d-neighboring area. For each piece of data x in the first quantization data, a cube area formed by extending d spatial elements in various directions by using a spatial element (for example, a current quantization level or an octree level) in which the data x is located as a center may be determined as a d-neighboring area of the data x, further, it is determined whether one or more pieces of data y of the reference quantization data exist in the d-neighboring area of the data x. When it is determined that the one or more pieces of data y of the reference quantization data exist in the d-neighboring area of the data x, the data x is removed from the first quantization data, to obtain the first change data, or data that is not removed from the first quantization data is the first change data.

Impact on accuracy of the first change data caused by an angle of view/location deviation between the first quantization data and the reference quantization information can be reduced in the neighboring area determining manner, and accuracy of the first change data can be improved. In addition, a larger value of the removal threshold indicates higher robustness of the extraction algorithm against the angle of view/location deviation. Correspondingly, when the removal threshold is large, a part of change data may also be deleted in the foregoing removal process, and therefore, the part of change data is omitted. Consequently, resolution of identifying the first change data can be reduced.

Based on the foregoing descriptions of the first change data, when determining the first change data, the first apparatus may remove, from the first quantization data, data that is changed compared with the reference quantization data. Therefore, the first apparatus may further extend the first change data, to improve integrity of the second quantization data determined based on the first change data, thereby improving integrity of the incremental data.

For example, the first apparatus may determine, in a neighboring area extension manner, a size of a second neighboring area based on an extension threshold, and determine, for each piece of data in the first quantization data, whether one or more pieces of data in the first change data exist in a second neighboring area of the data. When it is determined that the one or more pieces of data in the first change data exist in the second neighboring area of the data, the data may be added to the first change data, to obtain the second quantization data.

A value of the extension threshold may be a positive integer, and a specific value of the extension threshold may be preconfigured by the second apparatus for the first apparatus, or may be customized by the first apparatus. This is not limited.

In a possible implementation, a value of the removal threshold is greater than or equal to a value of the extension threshold. This can avoid a case in which the data removed by the first apparatus in the removal process is greatly extended to the changed data in the extension process, and improve accuracy of the changed data.

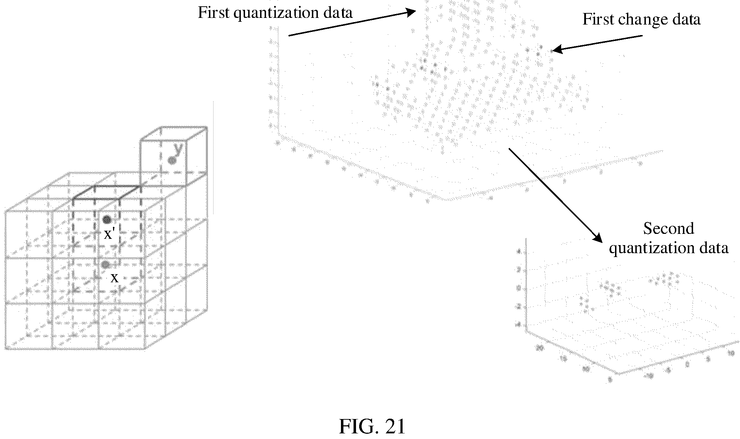

For example, as shown in FIG. 21, a value of the extension threshold is r. It may be determined that the second neighboring area is an r-neighboring area. For each piece of data x' in the first quantization data, a cube area formed by extending r spatial elements in various directions by using a spatial element (for example, a current quantization level or an octree level) in which the data x' is located as a center may be determined as an r-neighboring area of the data x', further, it is determined whether one or more pieces of data x of the first change data exist in the r-neighboring area of the data x'. When it is determined that the one or more pieces of data x of the first change data exist in the r-neighboring area of the data x', the data x' is added to the first change data, to obtain the second quantization data.

For another example, with reference to the first neighboring area and the second neighboring area, the first neighboring area is a 1-neighboring area and the second neighboring area is a 1-neighboring area. As shown in FIG. 21, for data x in the first quantization data, because the first neighboring area of the data x does not include data y in the reference quantization data, the data x may be determined as the first change data. For the data x' in the first quantization data, because the first neighboring area of the data x' includes the data y in the reference quantization data, the data x' may be removed. However, because the first change data x exists in the second neighboring area of the data x', the data x' may be added to the first change data, that is, the second quantization data determined based on the first change data may include the data x and the data x'.

Based on the foregoing descriptions of the second quantization data, the first apparatus may determine the incremental data based on the first data and the second quantization data.

For example, the first apparatus may determine a size of a third neighboring area based on a recovery threshold in a neighboring area recovery manner. The first apparatus may place the second quantization data and the first data in a same coordinate system. For each piece of data in the second quantization data, the first apparatus determines whether one or more pieces of data in the first data exist in a third neighboring area of the data. When it is determined that the one or more pieces of data in the first data exist in the third neighboring area of the data, the one or more pieces of data may be determined as the incremental data.

A value of the recovery threshold may be a positive integer, and a specific value of the recovery threshold may be preconfigured by the second apparatus for the first apparatus, or may be customized by the first apparatus. This is not limited.

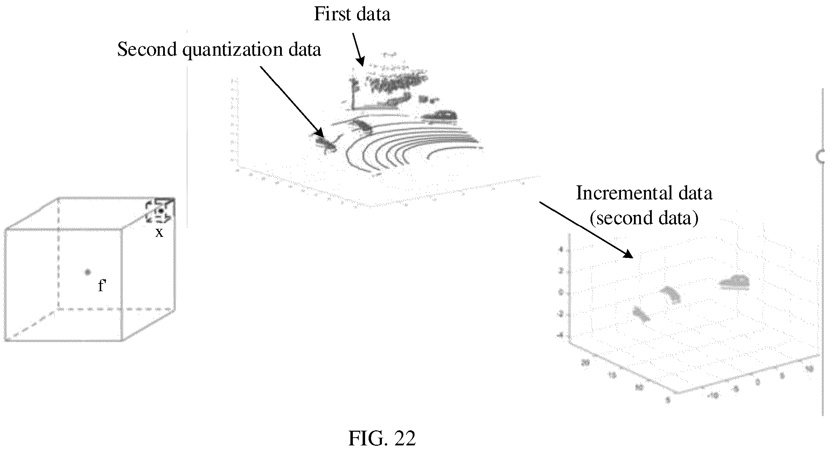

For example, as shown in FIG. 22, a value of the recovery threshold is m. It may be determined that the third neighboring area is an m-neighboring area. For each piece of data f in the second quantization data, a cube area formed by extending m spatial elements in various directions by using a spatial element (for example, a current quantization level or an octree level) in which the data f is located as a center may be determined as an m-neighboring area of the data f', further, it is determined whether one or more pieces of data x of the first data exist in the m-neighboring area of the data f. When it is determined that the one or more pieces of data x of the first data exist in the m-neighboring area of the data f, the data x is determined as the incremental data.

It should be noted that the first apparatus may determine the incremental data as the second data, or may quantize the incremental data based on the incremental data reporting precision, and determine incremental data obtained through quantization as the second data. This is not limited.

In a second possible design, similar to the determining the incremental data in the first possible design, the first apparatus may remove (or described as eliminate or delete) data that is in the reference quantization data and that is changed compared with the first quantization data, to obtain second change data, extend the second change data to obtain the second quantization data, and determine the deleted data based on the second quantization data.

The second quantization data may include data that is in the reference quantization data and that is deleted compared with the first quantization data.

For example, the first apparatus may determine, in a neighboring area determining manner, a size of a fourth neighboring area based on a removal threshold, determine, for each piece of data in the reference quantization data, whether one or more pieces of data in the first quantization data exist in a fourth neighboring area of the data. When it is determined that the one or more pieces of data in the first quantization data exist in the fourth neighboring area of the data, the data is removed from the reference quantization data, to obtain the second change data, or data that is not removed from the reference quantization data is determined as the second change data.

For descriptions of the removal threshold, refer to the descriptions of the removal threshold in the first possible design. Details are not described.

Impact on accuracy of the second change data caused by an angle of view/location deviation between the first quantization data and the reference quantization information can be reduced in the neighboring area determining manner, and accuracy of the second change data can be improved. In addition, a larger value of the removal threshold indicates higher robustness of the extraction algorithm against the angle of view/location deviation. Correspondingly, when the removal threshold is large, a part of change data may also be deleted in the foregoing removal process, and therefore, the part of change data is omitted. Consequently, resolution of identifying the second change data can be reduced.

Based on the foregoing descriptions of the second change data, when determining the second change data, the first apparatus may remove, from the reference quantization data, data that is changed compared with the first quantization data. Therefore, the first apparatus may further extend the second change data, to improve integrity of the second quantization data determined based on the second change data, thereby improving integrity of the deleted data.

For example, the first apparatus may determine, in a neighboring area extension manner, a size of a fifth neighboring area based on an extension threshold, and determine, for each piece of data in the reference quantization data, whether one or more pieces of data in the second change data exist in the fifth neighboring area of the data. When it is determined that the one or more pieces of data in the second change data exist in the fifth neighboring area of the data, the data may be added to the second change data, to obtain the second quantization data.

For descriptions of the extension threshold, refer to the descriptions of the extension threshold in the first possible design. Details are not described.

Based on the foregoing descriptions of the second quantization data, the first apparatus determines the second quantization data as the deleted data.

It should be noted that the first apparatus may determine the deleted data as the second data, or may quantize the deleted data based on the deleted data reporting precision, and determine the quantized deleted data as the second data. This is not limited.

Step 803: The first apparatus sends the second data to the second apparatus; and correspondingly, the second apparatus receives the second data from the first apparatus.

In a possible implementation, the first apparatus compresses the second data based on data reporting precision, to obtain second data obtained through compression, and the first apparatus sends the second data obtained through compression to the second apparatus, to reduce an amount of data reported by the first apparatus and reduce consumption of an air interface resource.

In a possible implementation, after compressing the second data based on the data reporting precision, the first apparatus further compresses the second data obtained through compression (for example, compresses the second data obtained through compression by using an octree structure), to further reduce an amount of data reported by the first apparatus, and reduce consumption of an air interface resource.

In a possible implementation, when the angle of view/location difference between the first data and the reference data is large, or when the first data changes a lot of data compared with the reference data, effect of extracting the second data according to the foregoing extraction algorithm may be poor, and effect of reducing an amount of reported data cannot be achieved. In this case, the first apparatus may determine not to report the second data (or not to report the second data obtained through compression), but to report the first data (or report first data obtained through compression).

In a first possible design, when a ratio of a data amount of the second data to a data amount of the first data is less than or equal to a first threshold, the first apparatus sends the second data obtained through compression to the second apparatus. When the ratio of the data amount of the second data to the data amount of the first data is greater than the first threshold, the first apparatus sends the first data obtained through compression to the second apparatus. The first threshold is greater than 0 and less than 1.

In a possible implementation, the first threshold is pre-configured by the second apparatus for the first apparatus, or is pre-negotiated by the second apparatus and the first apparatus, or is customized by the first apparatus. This is not limited.

In a second possible design, when an aggregation degree of the second data is less than or equal to a second threshold, the first apparatus sends the second data obtained through compression to the second apparatus. When the aggregation degree of the second data is greater than the second threshold, the first apparatus sends the first data obtained through compression to the second apparatus. A smaller aggregation degree of the second data indicates a smaller data amount of the second data obtained through compression. A larger aggregation degree of the second data indicates a larger data amount of the second data obtained through compression.

The aggregation degree may be defined according to a clustering algorithm. For example, the second data may be processed according to a clustering algorithm, to determine one or more clustering centers and a class corresponding to each piece of data, determine, based on the class corresponding to each piece of data, a distance between each piece of data and a clustering center corresponding to the data, and calculate an average value of distances between each piece of data and the clustering center corresponding to the data. The average value may standardize the aggregation degree of the second data. When the average value is less than or equal to the second threshold, the first apparatus sends the second data obtained through compression to the second apparatus; or when the average value is greater than the second threshold, the first apparatus sends the first data obtained through compression to the second apparatus.

In a possible implementation, the second threshold is pre-configured by the second apparatus for the first apparatus, or is pre-negotiated by the second apparatus and the first apparatus, or is customized by the first apparatus. This is not limited.

In a third possible design, when a data amount of the second data obtained through compression is less than or equal to a third threshold, the first apparatus sends the second data obtained through compression to the second apparatus. When the data amount of the second data obtained through compression is greater than the third threshold, the first apparatus sends the first data obtained through compression to the second apparatus.

The third threshold is pre-configured by the second apparatus for the first apparatus, or is pre-negotiated by the second apparatus and the first apparatus, or is customized by the first apparatus. This is not limited.

Based on the foregoing three possible designs, when the first apparatus determines to send the second data obtained through compression to the second apparatus, it may be considered that the extraction algorithm is successful; and when the first apparatus determines to send the first data obtained through compression to the second apparatus, it may be considered that the extraction algorithm fails.

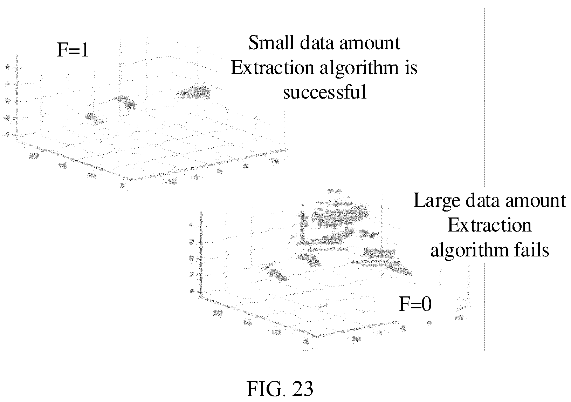

For example, as shown in FIG. 23, when the data amount of the second data determined according to the extraction algorithm is small, the first apparatus may determine that the extraction algorithm is successful (for example, F=1), and report the second data obtained through compression to the second apparatus; or when the data amount of the second data determined according to the extraction algorithm is large, the first apparatus may determine that the extraction algorithm fails (for example, F=0), and report the first data obtained through compression to the second apparatus.

In a possible implementation, the first apparatus sends first indication information to the second apparatus.

The first indication information may indicate that the data sent by the first apparatus is the second data obtained through compression (or indicate that the extraction algorithm is successful); or the first indication information may indicate that the data sent by the first apparatus is the first data obtained through compression (or indicate that the extraction algorithm fails).

For example, the first indication information is 1 bit. A value of the 1 bit may be set to 1 (that is, F=1), to indicate that the data sent by the first apparatus is the second data obtained through compression (or indicate that the extraction algorithm is successful); and a value of the 1 bit is set to 0 (that is, F=0), to indicate that the data sent by the first apparatus is the first data obtained through compression (or indicate that the extraction algorithm fails). Alternatively, a value of the 1 bit may be set to 0 (that is, F=0), to indicate that the data sent by the first apparatus is second data obtained through compression (or indicate that the extraction algorithm is successful); and a value of the 1 bit is set to 1 (that is, F=1), to indicate that the data sent by the first apparatus is first data obtained through compression (or indicate that the extraction algorithm fails). This is not limited.

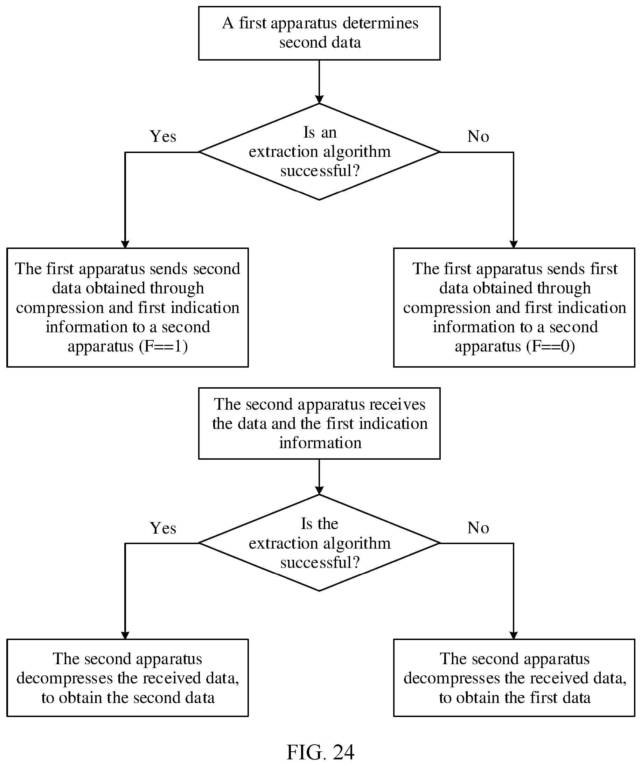

For example, as shown in FIG. 24, after determining the second data based on the first information and the first data, the first apparatus may determine, based on the data amount of the second data obtained through compression, whether the extraction algorithm is successful. When determining that the extraction algorithm is successful, the first apparatus may send, to the second apparatus, the second data obtained through compression and the first indication information (for example, F=1) indicating that the extraction algorithm is successful. When determining that the extraction algorithm fails, the first apparatus may send, to the second apparatus, the first data obtained through compression and the first indication information (for example, F=0) indicating that the extraction algorithm fails. Correspondingly, the second apparatus may determine, based on the received first indication information, whether the extraction algorithm is successful. When determining that the extraction algorithm is successful, the second apparatus may decompress the received data to obtain the second data. When determining that the extraction algorithm fails, the second apparatus may decompress the received data to obtain the first data.

Based on the foregoing description, when sending data to the second apparatus, the first apparatus may apply for a transmission resource from the third apparatus, and report the data to the second apparatus through an air interface based on the transmission resource configured by the third apparatus.

The third apparatus may be a network device, or may be a chip, a system on chip, or the like in the network device.

The following uses an example in which the first apparatus sends the second data obtained through compression to the second apparatus to describe in detail that the first apparatus applies for a transmission resource from the third apparatus and reports data to the second apparatus through an air interface based on the transmission resource configured by the third apparatus.

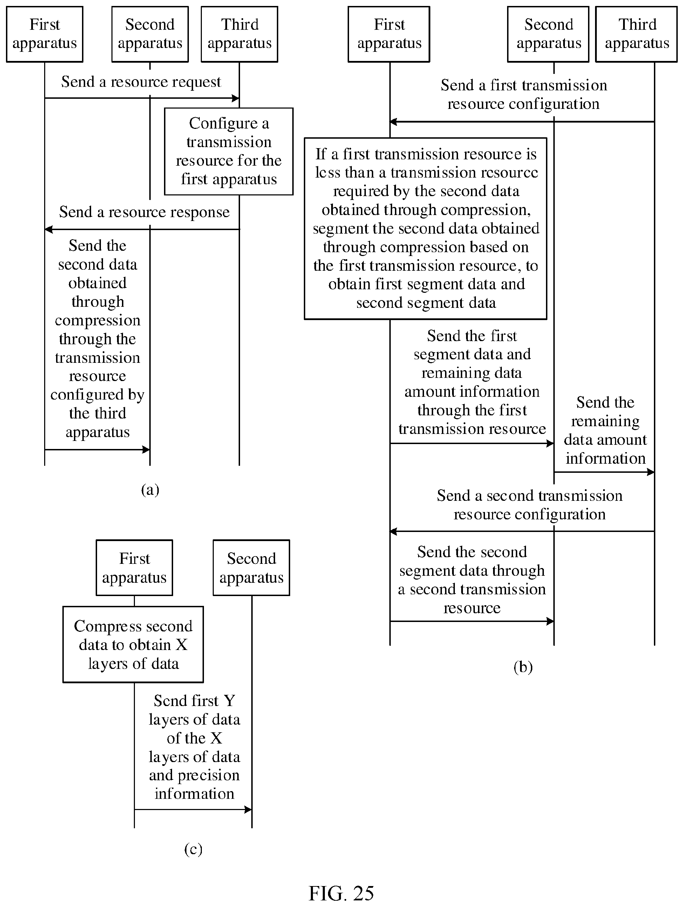

In a first possible design, as shown in (a) in FIG. 25, the first apparatus sends a resource request to the third apparatus, the third apparatus configures a transmission resource for the first apparatus based on the resource request, and indicates the configured transmission resource to the first apparatus through a resource response, and the first apparatus sends the second data obtained through compression to the second apparatus through the transmission resource configured by the third apparatus.

The resource request may include the data amount of the second data obtained through compression, and the resource response may indicate a transmission resource configured by the third apparatus for the first apparatus.

The first apparatus indicates the data amount of the second data obtained through compression to the third apparatus, so that the third apparatus can configure a corresponding transmission resource for the first apparatus based on the data amount, thereby avoiding a waste of a resource.

In a second possible design, the third apparatus may send a transmission resource configuration to the first apparatus. When the transmission resource configured by the third apparatus is insufficient for the first apparatus to report the second data obtained through complete compression once, the first apparatus may perform resource scheduling and data reporting for a plurality of times.

For example, as shown in (b) in FIG. 25, the third apparatus may send a first transmission resource configuration to the first apparatus. When a first transmission resource is less than the transmission resource required by the second data obtained through compression, the first apparatus may segment, based on the first transmission resource, the second data obtained through compression, to obtain first segment data and second segment data, and send the first segment data and remaining data amount information to the second apparatus through the first transmission resource. The second apparatus may send the remaining data amount information to the third apparatus. The third apparatus may send a second transmission resource configuration to the first apparatus based on the remaining data amount information, and the first apparatus sends the second segment data to the second apparatus through a second transmission resource.

The first transmission resource configuration may indicate the first transmission resource, a transmission resource required by the first segment data is less than or equal to the first transmission resource, the remaining data amount information may indicate a data amount of the second segment data, and the second transmission resource configuration may indicate the second transmission resource.

In a third possible design, as shown in (c) in FIG. 25, the first apparatus compresses the second data to obtain X layers of data, and sends first Y layers of data of the X layers of data and precision information to the second apparatus. A transmission priority of an i^{th} layer of data is higher than a transmission priority of an (i+1)^{th} layer of data, 1≤i<X, Y is less than or equal to X, and the precision information indicates data precision of the first Y layers of data.

For example, that the first apparatus compresses the second data may be performing hierarchical compression on the second data, for example, performing hierarchical compression by using the octree structure.

In the data obtained through the hierarchical compression, data with high importance has a high priority and low precision.

In a possible implementation, when the first apparatus sends the first Y layers of data in the X layers of data to the second apparatus, sending is completed once, or sending is performed for a plurality of times. This is not limited.

In a possible implementation, when the first apparatus sends data to the second apparatus, only data of a low-precision layer is reported for the first k times, and the first apparatus may determine not to report the data anymore after completing reporting for the k^{th} time (for example, which may be implemented by sending, to the second apparatus, indication information indicating the first apparatus not to report data anymore, and optionally, the indication information is 1 bit). In this case, when precision of the data reported by the first apparatus does not reach data reporting precision required by the second apparatus, the first apparatus may report precision of currently reported data to the second apparatus, so that the second apparatus determines precision of data reported by the first apparatus, and the second apparatus reconstructs an environment based on the precision.

For example, when the third apparatus does not configure sufficient transmission resources, the first apparatus cannot continue to report data to the second apparatus, and the first apparatus may send, to the second apparatus, the indication information indicating the first apparatus not to report data anymore.

In still another example, when a delay of allocating a transmission resource by the third apparatus is long, data in the first sensing area may have changed greatly, and the first apparatus may not need to continue to report data to the second apparatus. The first apparatus may send, to the second apparatus, the indication information indicating the first apparatus not to report data anymore.

In yet another example, the first apparatus may also determine, by the first apparatus, whether to continue to report data to the second apparatus. For example, when the first apparatus considers that precision of currently reported data is sufficient, the first apparatus may not continue to report data to the second apparatus.

The first apparatus may determine data reporting precision based on a service (for example, a sensing service) requirement, or determine data reporting precision based on a transmission resource. This is not limited.

In a possible implementation, when the first apparatus sends the second data obtained through compression to the second apparatus, after compressing the second data, the first apparatus performs processing such as channel coding (channel coding), modulation (modulation), remapping (remapping), and antenna mapping (antenna mapping), and then sends the second data obtained through compression to the second apparatus through an air interface.

Alternatively, when sending the first data obtained through compression to the second apparatus, the first apparatus may perform processing such as channel coding, modulation, remapping, and antenna mapping after compressing the first data, and then send the first data obtained through compression to the second apparatus through an air interface.

In a possible implementation, when the first apparatus is a terminal device, and the second apparatus is a data fusion center deployed on the network device, the terminal device reports the second data obtained through compression (or the first data obtained through compression) as RAN native data to the network device through an air interface.

For example, the terminal device reports the second data obtained through compression (or the first data obtained through compression) to the network device at the physical layer through a separately allocated air interface resource.

In this case, resource scheduling and MCS indication need to be separately performed for point cloud data reporting. In this example, the terminal device needs to separately perform resource scheduling on the second data obtained through compression (or the first data obtained through compression) and perform the MCS indication.

In still another example, the first apparatus reports the second data obtained through compression (or the first data obtained through compression) to the second apparatus in a manner of multiplexing upper-layer application data and in a form of a MAC CE. The network device extracts, at a MAC layer based on a MAC header, the reported second data obtained through compression (or the first data obtained through compression).

In this example, the MAC header may be modified or extended. The network device does not need to separately perform resource and MCS indication for the terminal device.

Based on the method shown in FIG. 8, the second apparatus may deliver the first information to the first apparatus based on the reference data that is of the first sensing area and that is stored in the second apparatus, and assist the first apparatus in reporting a part (namely, second data) that is of sensed data (namely, the first data) and that is changed relative to existing data (namely, the reference data) of the second apparatus. Alternatively, the description is as follows: The second apparatus assists the first apparatus in extracting a small amount of key information (namely, the second data) that needs to be reported from the sensed data (namely, the first data). Alternatively, the description is as follows: Redundancy included in the first data is mined by using global data possessed by the second apparatus and interaction between the second apparatus and the first apparatus, to assist the first apparatus in performing data compression. This can greatly reduce an amount of data reported by the first apparatus, reduce transmission overheads of the first apparatus, and reduce consumption of an air interface resource.

In a possible implementation, as shown in FIG. 12, the method further includes the following step 804.

Step 804: The second apparatus determines the first data based on the second data and the reference data.

The second apparatus may decompress the second data obtained through compression sent by the first apparatus, to obtain the second data.

The second apparatus may fuse the second data and the reference data, and restore (or reconstruct) the first data.

For example, the second apparatus may add the incremental data in the second data to the reference data, to obtain first intermediate data; and remove reference data corresponding to the deleted data in the second data from the first intermediate data, to obtain the first data.

For example, the first apparatus may determine a size of a sixth neighboring area based on the recovery threshold in the neighboring area recovery manner. The first apparatus may place the deleted data and the first intermediate data in a same coordinate system. For each piece of data in the deleted data, the first apparatus determines whether one or more pieces of data in the reference data exist in the sixth neighboring area of the data. When it is determined that the one or more pieces of data in the reference data exist in the sixth neighboring area of the data, the one or more pieces of data may be determined as the reference data corresponding to the deleted data, and then the reference data corresponding to the deleted data is removed from the first intermediate data, to obtain the first data.

In yet another example, the second apparatus may also remove reference data corresponding to the deleted data in the second data from the reference data, to obtain second intermediate data, and add the incremental data in the second data to the second intermediate data, to obtain the first data.

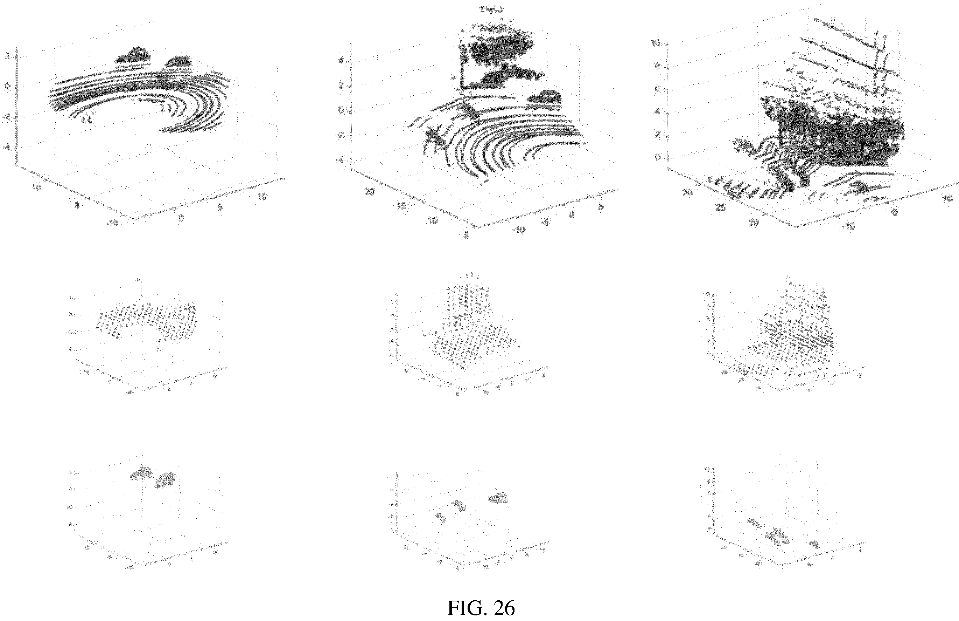

Based on the foregoing description, as shown in FIG. 26, for example, each of the three graphs in a first row in FIG. 26 includes the first data sensed by the first apparatus and the reference data stored by the second apparatus. A second row in FIG. 26 may represent the first information delivered by the second apparatus, and a third row in FIG. 26 may represent the second data obtained through compression determined by the first apparatus.

A sequence from left to right corresponds to three scenarios in FIG. 26. With reference to Table 1, a data amount of each scenario is separately provided.

**Table 1**

| | | | |
|---|---|---|---|
| First data (bit) | 106800 | 151320 | 199080 |
| Reference data (bit) | 33649 | 54889 | 88057 |
| First information (bit) | 577 (1.71%) | 793 (1.44%) | 1217 (1.38%) |
| second data obtained through compression (bit) | 9217 (27.39%) | 9025 (16.44%) | 10289 (11.68%) |

It can be learned from the foregoing simulation result that, in this embodiment of this application, reporting overheads obtained when the first apparatus reports the second data obtained through compression can be greatly reduced by using a very small quantity of low-precision first information indications. In addition, robustness of the extraction algorithm in this embodiment of this application is high, and impact of an angle of view/location difference on accuracy of data reported by the first apparatus can be effectively reduced.

It should be noted that the methods provided in embodiments of this application may be implemented separately, or may be implemented in combination. This is not limited.

It may be understood that in embodiments of this application, an execution body may perform a part or all of the steps in embodiments of this application. The steps or operations are only examples. Embodiments of this application may further include performing other operations or variations of various operations. In addition, the steps may be performed in a sequence different from a sequence presented in embodiments of this application, and it is possible that not all operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

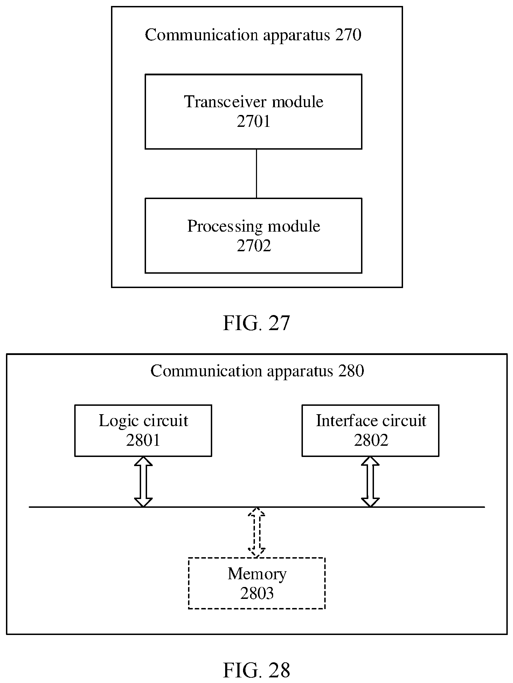

When each functional module is obtained through division based on each corresponding function, FIG. 27 shows a communication apparatus 270. The communication apparatus 270 may perform actions performed by the first apparatus in FIG. 8 to FIG. 26, or perform actions performed by the second apparatus in FIG. 8 to FIG. 26, or perform actions performed by the third apparatus in FIG. 8 to FIG. 26.

The communication apparatus 270 may include a transceiver module 2701 and a processing module 2702. For example, the communication apparatus 270 may be a communication device, or may be a chip used in the communication device, or another combined device or component that has a function of the foregoing communication apparatus. When the communication apparatus 270 is the communication device, the transceiver module 2701 may be a transceiver. The transceiver may include an antenna, a radio frequency circuit, and the like. The processing module 2702 may be a processor (or a processing circuit), for example, a baseband processor, and the baseband processor may include one or more CPUs. When the communication apparatus 270 is a component having a function of the communication apparatus, the transceiver module 2701 may be a radio frequency unit, and the processing module 2702 may be a processor (or a processing circuit), for example, a baseband processor. When the communication apparatus 270 is a chip system, the transceiver module 2701 may be an input/output interface of a chip (for example, a baseband chip), and the processing module 2702 may be a processor (or a processing circuit) of the chip system, and may include one or more central processing units. It should be understood that the transceiver module 2701 in this embodiment of this application may be implemented by a transceiver or a transceiver-related circuit assembly, and the processing module 2702 may be implemented by a processor or a processor-related circuit assembly (or referred to as a processing circuit).

For example, the transceiver module 2701 may be configured to perform all receiving and sending operations performed by the communication apparatus in the embodiments shown in FIG. 8 to FIG. 26, and/or configured to support another process of the technology described in this specification. The processing module 2702 may be configured to perform all operations other than the receiving and sending operations, performed by the communication apparatus in the embodiments shown in FIG. 8 to FIG. 26, and/or configured to support another process of the technology described in this specification.

In another possible implementation, the transceiver module 2701 in FIG. 27 may be replaced with a transceiver, where a function of the transceiver module 2701 may be integrated into the transceiver. The processing module 2702 may be replaced with a processor, where a function of the processing module 2702 may be integrated into the processor. Further, the communication apparatus 270 shown in FIG. 27 may further include a memory.

Alternatively, when the processing module 2702 is replaced with a processor, and the transceiver module 2701 is replaced with a transceiver, the communication apparatus 270 in this embodiment of this application may be the communication apparatus 280 shown in FIG. 28. The processor may be a logic circuit 2801, and the transceiver may be an interface circuit 2802. Further, the communication apparatus 280 shown in FIG. 28 may further include a memory 2803.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmitter and/or a data receiver), for example, a hard disk or memory of the terminal. The computer-readable storage medium may alternatively be an external storage device of the foregoing terminal, for example, a plug-in hard disk drive, a smart media card (smart media card, SMC), a secure digital (secure digital, SD) card, or a flash card (flash card) that is configured on the terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are only intended for a purpose of description, and shall not be understood as an indication or implication of relative importance or implicit indication of a quantity of indicated technical features. Therefore, a feature limited by "first" or "second" may explicitly or implicitly include one or more such features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item) "means one or more. "A plurality of" means two or more than two. "At least two (items)" means two, three, or more. The term "and/or" is used to describe an association relationship between associated objects, and indicates that three relationships may exist. For example, "A and/or B" may represent three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or assemblies may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such understanding, the technical solutions of this application essentially or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

## Claims

1. A data transmission method, comprising:
receiving, by a first apparatus, first information, wherein the first information indicates reference data that is of a first sensing area and that is stored in a second apparatus;
processing, by the first apparatus, first data based on the first information, to obtain second data, wherein the first data comprises data sensed by the first apparatus in the first sensing area, and the second data comprises data that is in the first data and that is changed compared with the first information; and
sending, by the first apparatus, the second data to the second apparatus.

2. The method according to claim 1, wherein
the second data comprises one or more of the following: incremental data and deleted data, wherein
the incremental data comprises data that is in the first data and that is added compared with the first information, and the deleted data comprises data that is in the first data and that is deleted compared with the first information.

3. The method according to claim 2, wherein
the second data further comprises one or more of the following: an incremental data identifier and a deleted data identifier, wherein
the incremental data identifier indicates the incremental data, and the deleted data identifier indicates the deleted data.

4. The method according to any one of claims 1 to 3, wherein
the first information comprises reference quantization data, wherein the reference quantization data is data obtained by quantizing the reference data.

5. The method according to any one of claims 1 to 4, wherein
the first information further comprises one or more of the following: first sensing area information, quantization precision of the reference quantization data, or data reporting precision, wherein
the data reporting precision comprises one or more of the following: incremental data reporting precision or deleted data reporting precision.

6. The method according to claim 5, wherein the processing, by the first apparatus, first data based on the first information, to obtain second data comprises:
quantizing, by the first apparatus, the first data based on the quantization precision of the reference quantization data, to obtain first quantization data;
determining, by the first apparatus, second quantization data based on the reference quantization data and the first quantization data, wherein the second quantization data comprises data that is in the first quantization data and that is changed compared with the reference quantization data; and
determining, by the first apparatus, the second data based on the second quantization data.

7. The method according to claim 5 or 6, wherein the sending, by the first apparatus, the second data to the second apparatus comprises:
compressing, by the first apparatus, the second data based on the data reporting precision, to obtain second data obtained through compression; and
sending, by the first apparatus, the second data obtained through compression to the second apparatus.

8. The method according to any one of claims 1 to 7, wherein before the receiving, by a first apparatus, first information, the method further comprises:
sending, by the first apparatus, second information, wherein the second information indicates the first sensing area.

9. The method according to claim 8, wherein
the second information comprises one or more of the following: location information of the first apparatus, angle of view information of the first apparatus, sensing capability information of the first apparatus, and first sensing area information, wherein
the sensing capability information of the first apparatus indicates a sensing distance and/or sensing precision supported by the first apparatus, and the first sensing area information indicates the first sensing area.

10. The method according to any one of claims 1 to 9, wherein the sending, by the first apparatus, the second data to the second apparatus comprises:
when a ratio of a data amount of the second data to a data amount of the first data is less than or equal to a first threshold, sending, by the first apparatus, the second data obtained through compression to the second apparatus.

11. The method according to any one of claims 1 to 10, wherein the method further comprises:
when the ratio of the data amount of the second data to the data amount of the first data is greater than the first threshold, sending, by the first apparatus, first data obtained through compression to the second apparatus.

12. The method according to claim 10 or 11, wherein the method further comprises:
sending, by the first apparatus, first indication information to the second apparatus, wherein the first indication information indicates that data sent by the first apparatus is the second data obtained through compression, or the first indication information indicates that data sent by the first apparatus is the first data obtained through compression.

13. The method according to any one of claims 1 to 12, wherein after the processing, by the first apparatus, first data based on the first information to obtain second data, the method further comprises:
sending, by the first apparatus, a resource request to a third apparatus, wherein the resource request comprises a data amount of the second data obtained through compression;
receiving, by the first apparatus, a resource response from the third apparatus, wherein the resource response indicates a transmission resource configured by the third apparatus for the first apparatus; and
sending, by the first apparatus, the second data obtained through compression to the second apparatus through the transmission resource.

14. The method according to any one of claims 1 to 12, wherein the sending, by the first apparatus, the second data to the second apparatus comprises:
receiving, by the first apparatus, a first transmission resource configuration from a third apparatus, wherein the first transmission resource configuration indicates a first transmission resource;
when the first transmission resource is less than a transmission resource required by the second data obtained through compression, segmenting, by the first apparatus based on the first transmission resource, the second data obtained through compression, to obtain first segment data and second segment data, wherein a transmission resource required by the first segment data is less than or equal to the first transmission resource; and
sending, by the first apparatus, the first segment data and remaining data amount information to the second apparatus through the first transmission resource, wherein the remaining data amount information indicates a data amount of the second segment data.

15. The method according to claim 14, wherein the method further comprises:
receiving, by the first apparatus, a second transmission resource configuration from the third apparatus, wherein the second transmission resource configuration indicates a second transmission resource; and
sending, by the first apparatus, the second segment data to the second apparatus through the second transmission resource.

16. The method according to any one of claims 1 to 15, wherein the sending, by the first apparatus, the second data to the second apparatus comprises:
compressing, by the first apparatus, the second data to obtain X layers of data, wherein a transmission priority of an i^{th} layer of data is higher than a transmission priority of an (i+1)^{th} layer of data, and 1≤i<X; and
sending, by the first apparatus, first Y layers of data of the X layers of data and precision information to the second apparatus, wherein Y is less than or equal to X, and the precision information indicates data precision of the first Y layers of data.

17. A data transmission method, comprising:
sending, by a second apparatus, first information to a first apparatus, wherein the first information indicates reference data that is of a first sensing area and that is stored in the second apparatus; and
receiving, by the second apparatus, second data from the first apparatus, wherein the second data comprises data that is in the first data and that is changed compared with the first information, and the first data comprises data sensed by the first apparatus in the first sensing area.

18. The method according to claim 17, wherein
the second data comprises one or more of the following: incremental data and deleted data, wherein
the incremental data comprises data that is in the first data and that is added compared with the first information, and the deleted data comprises data that is in the first data and that is deleted compared with the first information.

19. The method according to claim 18, wherein
the second data further comprises one or more of the following: an incremental data identifier and a deleted data identifier, wherein
the incremental data identifier indicates the incremental data, and the deleted data identifier indicates the deleted data.

20. The method according to any one of claims 17 to 19, wherein
the first information comprises reference quantization data, wherein the reference quantization data is data obtained by quantizing the reference data by the second apparatus.

21. The method according to any one of claims 17 to 20, wherein
the first information further comprises one or more of the following: first sensing area information, quantization precision of the reference quantization data, or data reporting precision, wherein
the data reporting precision comprises one or more of the following: incremental data reporting precision or deleted data reporting precision.

22. The method according to any one of claims 17 to 21, wherein the receiving, by the second apparatus, second data from the first apparatus comprises:
receiving, by the second apparatus, second data obtained through compression from the first apparatus.

23. The method according to claim 22, wherein the method further comprises:
decompressing, by the second apparatus, the second data obtained through compression, to obtain the second data; and
determining, by the second apparatus, the first data based on the second data and the reference data.

24. The method according to any one of claims 17 to 23, wherein before the sending, by a second apparatus, first information to a first apparatus, the method further comprises:
receiving, by the second apparatus, second information from the first apparatus, wherein the second information is used for the first sensing area.

25. The method according to claim 24, wherein
the second information comprises one or more of the following: location information of the first apparatus, angle of view information of the first apparatus, sensing capability information of the first apparatus, and first sensing area information, wherein
the sensing capability information of the first apparatus indicates a sensing distance and/or sensing precision supported by the first apparatus, and the first sensing area information indicates the first sensing area.

26. The method according to any one of claims 17 to 25, wherein the method further comprises:
receiving, by the second apparatus, first indication information from the first apparatus, wherein the first indication information indicates that data sent by the first apparatus is the second data obtained through compression; or the first indication information indicates that data sent by the first apparatus is first data obtained through compression.

27. The method according to any one of claims 17 to 26, wherein the receiving, by the second apparatus, second data from the first apparatus comprises:
receiving, by the second apparatus, first segment data and remaining data amount information from the first apparatus through a first transmission resource, wherein the remaining data amount information indicates a data amount of second segment data, the first segment data and the second segment data are data obtained by segmenting the second data obtained through compression by the first apparatus based on the first transmission resource, and a transmission resource required by the first segment data is less than or equal to the first transmission resource.

28. The method according to claim 27, wherein the method further comprises:
receiving, by the second apparatus, the second segment data from the first apparatus through a second transmission resource.

29. The method according to any one of claims 17 to 28, wherein the receiving, by the second apparatus, second data from the first apparatus comprises:
receiving, by the second apparatus, Y layers of data and precision information from the first apparatus, wherein the Y layers of data are first Y layers of data in X layers of data, the X layers of data are data obtained by compressing the second data by the first apparatus, Y is less than or equal to X, a transmission priority of an i^{th} layer of data is higher than a transmission priority of an (i+1)^{th} layer of data, and 1≤i<X; and the precision information indicates data precision of the Y layers of data.

30. A communication apparatus, comprising:
a transceiver module, configured to receive first information, wherein the first information indicates reference data that is of a first sensing area and that is stored in a second apparatus; and
a processing module, configured to process first data based on the first information, to obtain second data, wherein the first data comprises data sensed by a first apparatus in the first sensing area, and the second data comprises data that is in the first data and that is changed compared with the first information, wherein
the transceiver module is further configured to send the second data to the second apparatus.

31. The apparatus according to claim 30, wherein
the second data comprises one or more of the following: incremental data and deleted data, wherein
the incremental data comprises data that is in the first data and that is added compared with the first information, and the deleted data comprises data that is in the first data and that is deleted compared with the first information.

32. The apparatus according to claim 31, wherein
the second data further comprises one or more of the following: an incremental data identifier and a deleted data identifier, wherein
the incremental data identifier indicates the incremental data, and the deleted data identifier indicates the deleted data.

33. The apparatus according to any one of claims 30 to 32, wherein
the first information comprises reference quantization data, wherein the reference quantization data is data obtained by quantizing the reference data.

34. The apparatus according to any one of claims 30 to 33, wherein
the first information further comprises one or more of the following: first sensing area information, quantization precision of the reference quantization data, or data reporting precision, wherein
the data reporting precision comprises one or more of the following: incremental data reporting precision or deleted data reporting precision.

35. The apparatus according to claim 34, wherein the processing module is specifically configured to:
quantize the first data based on the quantization precision of the reference quantization data, to obtain first quantization data;
determine second quantization data based on the reference quantization data and the first quantization data, wherein the second quantization data comprises data that is in the first quantization data and that is changed compared with the reference quantization data; and
determine the second data based on the second quantization data.

36. The apparatus according to claim 34 or 35, wherein
the processing module is further configured to compress the second data based on the data reporting precision, to obtain second data obtained through compression; and
the transceiver module is further configured to send the second data obtained through compression to the second apparatus.

37. The apparatus according to any one of claims 30 to 36, wherein
the transceiver module is further configured to: before receiving the first information, send second information, wherein the second information indicates the first sensing area.

38. The apparatus according to claim 37, wherein
the second information comprises one or more of the following: location information of the first apparatus, angle of view information of the first apparatus, sensing capability information of the first apparatus, and first sensing area information, wherein
the sensing capability information of the first apparatus indicates a sensing distance and/or sensing precision supported by the first apparatus, and the first sensing area information indicates the first sensing area.

39. The apparatus according to any one of claims 30 to 38, wherein
the transceiver module is further configured to: when a ratio of a data amount of the second data to a data amount of the first data is less than or equal to a first threshold, send the second data obtained through compression to the second apparatus.

40. The apparatus according to any one of claims 30 to 39, wherein
the transceiver module is further configured to: when the ratio of the data amount of the second data to the data amount of the first data is greater than the first threshold, send first data obtained through compression to the second apparatus.

41. The apparatus according to claim 39 or 40, wherein
the transceiver module is further configured to send first indication information to the second apparatus, wherein the first indication information indicates that data sent by the first apparatus is the second data obtained through compression, or the first indication information indicates that data sent by the first apparatus is the first data obtained through compression.

42. The apparatus according to any one of claims 30 to 41, wherein
the transceiver module is further configured to: after the processing module processes the first data based on the first information to obtain the second data, send a resource request to a third apparatus, wherein the resource request comprises a data amount of the second data obtained through compression;
the transceiver module is further configured to receive a resource response from the third apparatus, wherein the resource response indicates a transmission resource configured by the third apparatus for the first apparatus; and
the transceiver module is further configured to send the second data obtained through compression to the second apparatus through the transmission resource.

43. The apparatus according to any one of claims 30 to 41, wherein
the transceiver module is further configured to receive a first transmission resource configuration from a third apparatus, wherein the first transmission resource configuration indicates a first transmission resource;
the processing module is further configured to: when the first transmission resource is less than a transmission resource required by the second data obtained through compression, segment, based on the first transmission resource, the second data obtained through compression, to obtain first segment data and second segment data, wherein a transmission resource required by the first segment data is less than or equal to the first transmission resource; and
the transceiver module is further configured to send the first segment data and remaining data amount information to the second apparatus through the first transmission resource, wherein the remaining data amount information indicates a data amount of the second segment data.

44. The apparatus according to claim 43, wherein
the transceiver module is further configured to receive a second transmission resource configuration from the third apparatus, wherein the second transmission resource configuration indicates a second transmission resource; and
the transceiver module is further configured to send the second segment data to the second apparatus through the second transmission resource.

45. The apparatus according to any one of claims 30 to 44, wherein
the processing module is further configured to compress the second data to obtain X layers of data, wherein a transmission priority of an i^{th} layer of data is higher than a transmission priority of an (i+1)^{th} layer of data, and 1≤i<X; and
the transceiver module is further configured to send first Y layers of data of the X layers of data and precision information to the second apparatus, wherein Y is less than or equal to X, and the precision information indicates data precision of the first Y layers of data.

46. A communication apparatus, comprising:
a processing module, configured to determine first information; and
a transceiver module, configured to send the first information to a first apparatus, wherein the first information indicates reference data that is of a first sensing area and that is stored in a second apparatus, wherein
the transceiver module is further configured to receive second data from the first apparatus, wherein the second data comprises data that is in the first data and that is changed compared with the first information, and the first data comprises data sensed by the first apparatus in the first sensing area.

47. The apparatus according to claim 46, wherein
the second data comprises one or more of the following: incremental data and deleted data, wherein
the incremental data comprises data that is in the first data and that is added compared with the first information, and the deleted data comprises data that is in the first data and that is deleted compared with the first information.

48. The apparatus according to claim 47, wherein
the second data further comprises one or more of the following: an incremental data identifier and a deleted data identifier, wherein
the incremental data identifier indicates the incremental data, and the deleted data identifier indicates the deleted data.

49. The apparatus according to any one of claims 46 to 48, wherein
the first information comprises reference quantization data, wherein the reference quantization data is data obtained by quantizing the reference data by the second apparatus.

50. The apparatus according to any one of claims 46 to 49, wherein
the first information further comprises one or more of the following: first sensing area information, quantization precision of the reference quantization data, or data reporting precision, wherein
the data reporting precision comprises one or more of the following: incremental data reporting precision or deleted data reporting precision.

51. The apparatus according to any one of claims 46 to 50, wherein
the transceiver module is specifically configured to receive second data obtained through compression from the first apparatus.

52. The apparatus according to claim 51, wherein
the processing module is further configured to decompress the second data obtained through compression, to obtain the second data; and
the processing module is further configured to determine the first data based on the second data and the reference data.

53. The apparatus according to any one of claims 46 to 52, wherein
the transceiver module is further configured to: before sending the first information to the first apparatus, receive second information from the first apparatus, wherein the second information is used for the first sensing area.

54. The apparatus according to claim 53, wherein
the second information comprises one or more of the following: location information of the first apparatus, angle of view information of the first apparatus, sensing capability information of the first apparatus, and first sensing area information, wherein
the sensing capability information of the first apparatus indicates a sensing distance and/or sensing precision supported by the first apparatus, and the first sensing area information indicates the first sensing area.

55. The apparatus according to any one of claims 46 to 54, wherein
the transceiver module is further configured to receive first indication information from the first apparatus, wherein the first indication information indicates that data sent by the first apparatus is the second data obtained through compression, or the first indication information indicates that data sent by the first apparatus is first data obtained through compression.

56. The apparatus according to any one of claims 46 to 55, wherein
the transceiver module is further configured to receive first segment data and remaining data amount information from the first apparatus through a first transmission resource, wherein the remaining data amount information indicates a data amount of second segment data, the first segment data and the second segment data are data obtained by segmenting the second data obtained through compression by the first apparatus based on the first transmission resource, and a transmission resource required by the first segment data is less than or equal to the first transmission resource.

57. The apparatus according to claim 56, wherein
the transceiver module is further configured to receive the second segment data from the first apparatus through a second transmission resource.

58. The apparatus according to any one of claims 46 to 57, wherein
the transceiver module is further configured to receive Y layers of data and precision information from the first apparatus, wherein the Y layers of data are first Y layers of data in X layers of data, the X layers of data are data obtained by compressing the second data by the first apparatus, Y is less than or equal to X, a transmission priority of an i^{th} layer of data is higher than a transmission priority of an (i+1)^{th} layer of data, and 1≤i<X; and the precision information indicates data precision of the Y layers of data.

59. A communication apparatus, wherein the communication apparatus comprises a processor, and the processor is configured to: run a computer program or instructions, or run a logic circuit, for the communication apparatus to perform the data transmission method according to any one of claims 1 to 16, or perform the data transmission method according to any one of claims 17 to 29.

60. A communication apparatus, wherein the communication apparatus comprises an input/output interface and a logic circuit, the input/output interface is configured to input and/or output information, and the logic circuit is configured to: perform the data transmission method according to any one of claims 1 to 16 or the data transmission method according to any one of claims 17 to 29, or perform processing based on the information and/or generate the information.

61. A computer-readable storage medium, wherein the computer-readable storage medium stores computer instructions or a program, and when the computer instructions or the program is run on a computer, the computer is enabled to perform the data transmission method according to any one of claims 1 to 16, or perform the data transmission method according to any one of claims 17 to 29.

62. A computer program product, wherein the computer program product comprises computer instructions, and when a part or all of the computer instructions are run on a computer, the computer is enabled to perform the data transmission method according to any one of claims 1 to 16, or perform the data transmission method according to any one of claims 17 to 29.

63. A communication system, comprising a first apparatus and a second apparatus, wherein
the first apparatus is configured to perform the data transmission method according to any one of claims 1 to 16; and
the second apparatus is configured to perform the data transmission method according to any one of claims 17 to 29.
